# EUROPEAN PATENT APPLICATION

(11) **EP 3 145 232 A1**
(43) Date of publication of application: **22.03.2017**
(21) Application number: 15809901.0
(22) Date of filing: 09.02.2015
(51) Int. Cl.: H04W 12/06

(54) **ACCESS METHOD, APPARATUS AND SYSTEM BASED ON TEMPORARY MAC ADDRESS**

(30) Priority: 16.06.2014 CN 201410267784
(71) Applicant: Huawei Technologies Co., Ltd., Longgang District Shenzhen, Guangdong 518129 (CN)
(72) Inventor: WANG, Haiguang, Shenzhen Guangdong 518129 (CN); WANG, Guilin, Shenzhen Guangdong 518129 (CN)
(74) Representative: Epping - Hermann - Fischer
(86) International application number: PCT/CN2015/072518
(87) International publication number: WO 2015/192665

(57) **Abstract**

Embodiments of the present invention provide a temporary MAC address-based access method, apparatus, and system, and relate to the field of network communications. The method includes: in a process in which a STA performs wireless communication access authentication on a base station, sending, to the STA, a message used to indicate whether the base station supports a STA in using a temporary MAC address TMA. According to the present invention, the message used to indicate whether the base station supports a STA in using a temporary MAC address TMA is sent to the STA, thereby resolving a problem that a STA fails in normal communication easily caused because the STA continually performs access authentication on a base station by using a generated TMA when the base station does not support a STA in using a TMA. A case can be avoided in which access of the STA is rejected when the base station does not support a STA in using a TMA, thereby ensuring that the STA performs access authentication by using an RMA, and achieving an effect of wireless communication.

## Description

### TECHNICAL FIELD

The present invention relates to the field of network communications, and in particular, to a temporary MAC address-based access method, apparatus, and system.

### BACKGROUND

When communication is performed by using a wireless local area network (WLAN, Wireless Local Area Network) technology, devices may communicate in an infrastructure network mode (Infrastructure Mode). In this infrastructure, there is a central node on a network, and the central node is generally referred to as an AP (Access Point, base station). Another non-base station node STA (Station, a non-base station device on a WLAN network) needs to first establish a connection with the AP before communicating with another node on the network and another node on the Internet.

In current wireless local area network communication, the AP and the STA generally communicate by using a global MAC (Media Access Control, media access control sublayer) address allocated by an equipment vendor during manufacture, and the MAC address is almost unchanged during a service life of a device. In wireless local area network communication, a MAC address of a sender and a MAC address of a receiver included in a MAC data packet are sent in a plaintext manner, and a third party may easily obtain MAC address information through listening. Further, there is a unique correspondence between a MAC address and a device (such as a mobile phone), and personal information of a user who possesses the device may be associated according to the device. Therefore, leakage of the MAC address means leakage of personal privacy. MAC has already become a type of nonnegligible personal privacy information.

In a wireless network environment, to avoid a threat to personal privacy caused by MAC address leakage, the MAC address needs to be protected. Currently, replacing, with a temporary MAC address (TMA, Temporal MAC Address), a real MAC address (RMA, Real MAC Address) provided by a device manufacturer has already been proposed. However, when the TMA is being used, a TMA conflict problem needs to be resolved in a system because of nonuniqueness of the TMA. Generally, the temporary MAC address is a local MAC address (Local MAC Address). That is, the 47^{th} bit of the MAC address is set to 1. The TMA may be generated in a range by a base station or a user. A generation method may be random selection or local system allocation.

When a TMA is used for wireless network communication in a related technology, when a STA is to be connected to a base station, the STA needs to determine whether the base station is in a communication range. Currently, there are two manners for determining whether a base station is in a communication range of a STA. One manner is a passive discovery manner: The STA listens, on a channel, to a discovery message (such as beacon signaling, beacon message) sent by the base station, and when discovering a target base station on a channel, the STA may send an authentication message (Authentication Request) to access the base station. The other manner is an active manner: The STA actively sends a probe message (Probe Request) on a channel. If a target base station receives probe signaling, the base station responds with a probe response message (Probe Response), and content of the probe response message is similar to that of the discovery message. After receiving the probe response message, the STA may determine, according to the content of the probe response message, whether to access the discovered base station. In related access authentication, the STA may send a probe message to the base station by using a generated TMA, and the STA sends an authentication message to the base station by using another TMA and still uses the TMA subsequently.

During implementation of the present invention, the inventor finds that the prior art has at least the following problems: When a base station does not support a STA in using a TMA, the STA may continually perform access authentication on the base station by using a generated TMA, which easily causes the STA to fail in normal communication.

### SUMMARY

To resolve a problem that a STA fails in normal communication easily caused because the STA continually performs access authentication on a base station by using a generated TMA when the base station does not support a STA in using a TMA, embodiments of the present invention provide a temporary MAC address-based access method, apparatus, and system. The technical solutions are as follows:

According to a first aspect, a temporary MAC address-based access method is provided and is applied to a base station, where the method includes:
in a process in which a non-base station device STA performs wireless communication access authentication on the base station, sending, to the STA, a message used to indicate whether the base station supports a STA in using a temporary MAC address TMA, so that the STA sends an authentication message to the base station according to the message, where the authentication message is an authentication message that is sent by the STA to the base station by using a TMA when the message is used to indicate that the base station supports a STA in using a TMA;
receiving the authentication message, and parsing out the TMA by using the authentication message; and
sending an authentication response message to the STA according to the authentication message, where the authentication response message is used to indicate whether the base station allows the STA to use the TMA for communication.

In a first possible implementation manner of the first aspect, the message is a discovery message, and the sending, to the STA, a message used to indicate whether a STA is supported in using a TMA includes:
sending a discovery message at a predetermined time interval in a broadcast manner, where the discovery message includes a first indicator used to indicate whether the base station supports a STA in using a TMA.

With reference to the first aspect or the first possible implementation manner of the first aspect, in a second possible implementation manner, when the first indicator is used to indicate that the base station supports a STA in using a TMA, the discovery message further includes a generation rule used to instruct a STA to generate a TMA.

With reference to the first aspect, the first possible implementation manner of the first aspect, or the second possible implementation manner of the first aspect, in a third possible implementation manner, the discovery message further includes a second indicator used to indicate whether the STA is required to upload a real MAC address RMA of the STA.

With reference to any one of the first aspect, or the first possible implementation manner of the first aspect to the third possible implementation manner of the first aspect, in a fourth possible implementation manner, before the sending, to the STA, a message used to indicate whether the base station supports a STA in using a temporary MAC address TMA, the method further includes:
receiving a probe message sent by the STA by using a generated TMA; where
the message is a probe response message, and the sending, to the STA, a message used to indicate whether a STA is supported in using a temporary MAC address TMA includes:
   sending a probe response message to the STA, where the probe response message includes a first indicator used to indicate whether the base station supports a STA in using a TMA.

With reference to any one of the first aspect, or the first possible implementation manner of the first aspect to the fourth possible implementation manner of the first aspect, in a fifth possible implementation manner, the sending a probe response message to the STA includes:
parsing out the TMA by using the probe message;
when the base station supports a STA in using a TMA, determining whether the TMA conflicts with a prestored TMA, where the prestored TMA includes a TMA used by each STA that performs wireless communication connection with the base station; and
if a determining result is that the TMA does not conflict with the prestored TMA, sending, to the STA, the probe response message used to indicate that the STA is allowed to use the TMA for communication, so that the STA confirms using the TMA in subsequent communication; or
if a determining result is that the TMA conflicts with the prestored TMA, sending, to the STA, the probe response message used to indicate that the STA is not allowed to use the TMA for communication.

With reference to any one of the first aspect, or the first possible implementation manner of the first aspect to the fifth possible implementation manner of the first aspect, in a sixth possible implementation manner, when the first indicator is used to indicate that the base station supports a STA in using a TMA, the probe response message further includes a generation rule used to instruct a STA to generate a TMA.

With reference to any one of the first aspect, or the first possible implementation manner of the first aspect to the sixth possible implementation manner of the first aspect, in a seventh possible implementation manner, the probe response message further includes a second indicator used to indicate whether the STA is required to upload a real MAC address RMA of the STA.

With reference to any one of the first aspect, or the first possible implementation manner of the first aspect to the seventh possible implementation manner of the first aspect, in an eighth possible implementation manner, the sending an authentication response message to the STA according to the authentication message includes:
when the base station supports a STA in using a TMA, determining whether the TMA conflicts with the prestored TMA, where the prestored TMA includes a TMA used by each STA that performs wireless communication connection with the base station; and
if a determining result is that the TMA does not conflict with the prestored TMA, sending, to the STA, an authentication response message used to indicate that the STA is allowed to use the TMA for communication, so that the STA confirms using the TMA in subsequent communication; or
if a determining result is that the TMA conflicts with the prestored TMA, sending, to the STA, an authentication response message used to indicate that the STA is not allowed to use the TMA for communication.

With reference to any one of the first aspect, or the first possible implementation manner of the first aspect to the eighth possible implementation manner of the first aspect, in a ninth possible implementation manner, the method further includes:
exchanging key signaling information with the STA, and generating, according to the key signaling information, a key shared with the STA; receiving the RMA encrypted by the STA by using the key; and decrypting the encrypted RMA by using the key; or
generating a public key and a private key; sending the public key to the STA; receiving the RMA encrypted by the STA by using the public key; and decrypting the encrypted RMA by using the private key.

With reference to any one of the first aspect, or the first possible implementation manner of the first aspect to the ninth possible implementation manner of the first aspect, in a tenth possible implementation manner, the method further includes:
detecting whether the RMA obtained by means of decryption exists in a prestored RMA list, where the prestored RMA list stores an RMA of a STA allowed to access the base station; and
if a detection result is that the RMA obtained by means of decryption exists in the prestored RMA list, allowing completing current access authentication.

According to a second aspect, a temporary MAC address-based access method is provided and is applied to a non-base station device STA that performs wireless communication connection with a base station, where the method includes:
in a process in which the non-base station device STA performs wireless communication access authentication on the base station, receiving a message that is sent by the base station and is used to indicate whether the base station supports a STA in using a temporary MAC address TMA; and
sending an authentication message to the base station by using a TMA when the message is used to indicate that the base station supports a STA in using a TMA.

In a first possible implementation manner of the second aspect, the message is a discovery message, and the receiving a message that is sent by the base station and is used to indicate whether the base station supports a STA in using a temporary MAC address TMA includes:
receiving a discovery message sent by the base station at a predetermined time interval in a broadcast manner, where the discovery message includes a first indicator used to indicate whether the base station supports a STA in using a TMA.

With reference to the second aspect or the first possible implementation manner of the second aspect, in a second possible implementation manner, when the first indicator is used to indicate that the base station supports a STA in using a TMA, the discovery message further includes a generation rule used to instruct a STA to generate a TMA.

With reference to the second aspect, the first possible implementation manner of the second aspect, or the second possible implementation manner of the second aspect, in a third possible implementation manner, the sending an authentication message to the base station by using a TMA when the message is used to indicate that the base station supports a STA in using a TMA includes:
generating a TMA by using the generation rule when the first indicator is used to indicate that the base station supports a STA in using a TMA; and
sending the authentication message to the base station by using the TMA, so that the base station receives the authentication message, parses out the TMA by using the authentication message, and sends an authentication response message to the STA according to the authentication message, where the authentication response message is used to indicate whether the base station allows the STA to use the TMA for communication.

With reference to any one of the second aspect, or the first possible implementation manner of the second aspect to the third possible implementation manner of the second aspect, in a fourth possible implementation manner, the discovery message further includes a second indicator used to indicate whether the STA is required to upload a real MAC address RMA of the STA.

With reference to any one of the second aspect, or the first possible implementation manner of the second aspect to the fourth possible implementation manner of the second aspect, in a fifth possible implementation manner, before the receiving a message that is sent by the base station and is used to indicate whether the base station supports a STA in using a temporary MAC address TMA, the method further includes:
sending a probe message to the base station by using a generated TMA, so that the base station parses out the TMA by using the probe message; when supporting a STA in using a TMA, the base station detects whether the TMA conflicts with a prestored TMA, where the prestored TMA includes a TMA used by each STA that performs wireless communication connection with the base station; if a detection result is that the TMA does not conflict with the prestored TMA, the base station sends, to the STA, a probe response message used to indicate that the STA is allowed to use the TMA for communication, so that the STA confirms using the TMA in subsequent communication, and completes current access authentication; and if a detection result is that the TMA conflicts with the prestored TMA, the base station sends, to the STA, a probe response message used to indicate that the STA is not allowed to use the TMA for communication; where
the message is the probe response message, and the receiving a message that is sent by the base station and is used to indicate whether the base station supports a STA in using a temporary MAC address TMA includes:
   receiving the probe response message sent by the base station, where the probe response message includes a first indicator used to indicate whether the base station supports a STA in using a TMA.

With reference to any one of the second aspect, or the first possible implementation manner of the second aspect to the fifth possible implementation manner of the second aspect, in a sixth possible implementation manner, when the first indicator is used to indicate that the base station supports a STA in using a TMA, the probe response message further includes a generation rule used to instruct a STA to generate a TMA.

With reference to any one of the second aspect, or the first possible implementation manner of the second aspect to the sixth possible implementation manner of the second aspect, in a seventh possible implementation manner, the sending an authentication message to the base station by using a TMA when the message is used to indicate that the base station supports a STA in using a TMA includes:
when the first indicator in the probe response message is used to indicate that the base station supports a STA in using a TMA, determining whether the probe response message is used to indicate that the STA is allowed to use the TMA in the probe message for communication;
when a determining result is that the probe response message is used to indicate that the STA is allowed to use the TMA in the probe message for communication, confirming using the TMA in subsequent communication, and sending an authentication message to the base station by using the TMA; and
when a determining result is that the probe response message is used to indicate that the STA is not allowed to use the TMA in the probe message for communication, generating another TMA by using the generation rule, and sending an authentication message to the base station by using the generated TMA.

With reference to any one of the second aspect, or the first possible implementation manner of the second aspect to the seventh possible implementation manner of the second aspect, in an eighth possible implementation manner, the probe response message further includes a second indicator used to indicate whether the STA is required to upload an RMA of the STA.

With reference to any one of the second aspect, or the first possible implementation manner of the second aspect to the eighth possible implementation manner of the second aspect, in a ninth possible implementation manner, after the sending an authentication message to the base station by using a TMA when the message is used to indicate that the base station supports a STA in using a TMA, the method further includes:
receiving the authentication response message sent by the base station, where the authentication response message is an authentication response message that is sent by the base station to the STA according to the authentication message after the base station receives the authentication message sent by the STA, the base station parses out the TMA by using the authentication message, and the authentication response message is used to indicate whether the base station allows the STA to use the TMA for communication;
when the authentication response message is used to indicate that the STA is allowed to use the TMA for communication, confirming using the TMA in subsequent communication; and
when the authentication response message is used to indicate that the STA is not allowed to use the TMA for communication, determining whether a quantity of times that the STA generates TMAs in current access authentication reaches a predetermined threshold; and if a determining result is that the quantity of times that the STA generates TMAs in the current access authentication does not reach the predetermined threshold, generating another TMA according to the generation rule, and sending an authentication message to the base station by using the TMA; or terminating the current access authentication if a determining result is that the quantity of times that the STA generates TMAs in the current access authentication reaches the predetermined threshold.

With reference to any one of the second aspect, or the first possible implementation manner of the second aspect to the ninth possible implementation manner of the second aspect, in a tenth possible implementation manner, the method further includes:
exchanging key signaling information with the base station, and generating, according to the key signaling information, a key shared with the base station; encrypting the RMA of the STA by using the key; and sending the encrypted RMA to the base station, so that the base station decrypts the encrypted RMA by using the key; or
receiving a public key sent by the base station, where the public key is generated by the base station; encrypting the RMA of the STA by using the public key; and sending the encrypted RMA to the base station, so that the base station decrypts the RMA by using a generated private key.

According to a third aspect, a temporary MAC address-based access apparatus is provided and is applied to a base station, where the apparatus includes:
a message sending module, in a process in which a non-base station device STA performs wireless communication access authentication on the base station, send, to the STA, a message used to indicate whether the base station supports a STA in using a temporary MAC address TMA, so that the STA sends an authentication message to the base station according to the message, where the authentication message is an authentication message that is sent by the STA to the base station by using a TMA when the message is used to indicate that the base station supports a STA in using a TMA;
an authentication message receiving module, configured to: receive the authentication message, and parse out the TMA by using the authentication message; and
a response sending module, configured to send an authentication response message to the STA according to the authentication message received by the authentication message receiving module, where the authentication response message is used to indicate whether the base station allows the STA to use the TMA for communication.

In a first possible implementation manner of the third aspect, the message is a discovery message, and the message sending module is further configured to:
send a discovery message at a predetermined time interval in a broadcast manner, where the discovery message includes a first indicator used to indicate whether the base station supports a STA in using a TMA.

With reference to the third aspect or the first possible implementation manner of the third aspect, in a second possible implementation manner, when the first indicator is used to indicate that the base station supports a STA in using a TMA, the discovery message further includes a generation rule used to instruct a STA to generate a TMA.

With reference to the third aspect, the first possible implementation manner of the third aspect, or the second possible implementation manner of the third aspect, in a third possible implementation manner, the discovery message further includes a second indicator used to indicate whether the STA is required to upload a real MAC address RMA of the STA.

With reference to any one of the third aspect, or the first possible implementation manner of the third aspect to the third possible implementation manner of the third aspect, in a fourth possible implementation manner, the apparatus further includes:
a probe message receiving module, configured to receive a probe message sent by the STA by using a generated TMA; and
the message is a probe response message, and the message sending module is further configured to:
   send a probe response message to the STA, where the probe response message includes a first indicator used to indicate whether the base station supports a STA in using a TMA.

With reference to any one of the third aspect, or the first possible implementation manner of the third aspect to the fourth possible implementation manner of the third aspect, in a fifth possible implementation manner, the message sending module includes:
a parsing unit, configured to parse out the TMA by using the probe message;
a first determining unit, configured to: when the base station supports a STA in using a TMA, determine whether the TMA conflicts with a prestored TMA, where the prestored TMA includes a TMA used by each STA that performs wireless communication connection with the base station;
a first response sending unit, configured to: when a determining result of the first determining unit is that the TMA does not conflict with the prestored TMA, send, to the STA, the probe response message used to indicate that the STA is allowed to use the TMA for communication, so that the STA confirms using the TMA in subsequent communication; and
a second response sending unit, configured to: when a determining result of the first determining unit is that the TMA conflicts with the prestored TMA, send, to the STA, the probe response message used to indicate that the STA is not allowed to use the TMA for communication.

With reference to any one of the third aspect, or the first possible implementation manner of the third aspect to the fifth possible implementation manner of the third aspect, in a sixth possible implementation manner, when the first indicator is used to indicate that the base station supports a STA in using a TMA, the probe response message further includes a generation rule used to instruct a STA to generate a TMA.

With reference to any one of the third aspect, or the first possible implementation manner of the third aspect to the sixth possible implementation manner of the third aspect, in a seventh possible implementation manner, the probe response message further includes a second indicator used to indicate whether the STA is required to upload a real MAC address RMA of the STA.

With reference to any one of the third aspect, or the first possible implementation manner of the third aspect to the seventh possible implementation manner of the third aspect, in an eighth possible implementation manner, the response sending module includes:
a second determining unit, configured to: when the base station supports a STA in using a TMA, determine whether the TMA conflicts with the prestored TMA, where the prestored TMA includes a TMA used by each STA that performs wireless communication connection with the base station;
a third response sending unit, configured to: when a determining result of the second determining unit is that the TMA does not conflict with the prestored TMA, send, to the STA, an authentication response message used to indicate that the STA is allowed to use the TMA for communication, so that the STA confirms using the TMA in subsequent communication; and
a fourth response sending unit, configured to: when a determining result of the second determining unit is that the TMA conflicts with the prestored TMA, send, to the STA, an authentication response message used to indicate that the STA is not allowed to use the TMA for communication.

With reference to any one of the third aspect, or the first possible implementation manner of the third aspect to the eighth possible implementation manner of the third aspect, in a ninth possible implementation manner, the apparatus further includes:
a first generation module, configured to: exchange key signaling information with the STA, and generate, according to the key signaling information, a key shared with the STA; a first receiving module, configured to receive the RMA encrypted by the STA by using the key; and a first decryption module, configured to decrypt the encrypted RMA by using the key; or
a second generation module, configured to generate a public key and a private key; a public key sending module, configured to send the public key to the STA; a second receiving module, configured to receive the RMA encrypted by the STA by using the public key; and a second decryption module, configured to decrypt the encrypted RMA by using the private key.

With reference to any one of the third aspect, or the first possible implementation manner of the third aspect to the ninth possible implementation manner of the third aspect, in a tenth possible implementation manner, the apparatus further includes:
a detection module, configured to detect whether the RMA obtained by means of decryption exists in a prestored RMA list, where the prestored RMA list stores an RMA of a STA allowed to access the base station; and
an access allowing module, configured to: when a detection result of the detection module is that the RMA obtained by means of decryption exists in the prestored RMA list, allow completing current access authentication.

According to a fourth aspect, a temporary MAC address-based access apparatus is provided and is applied to a non-base station device STA that performs wireless communication connection with a base station, where the apparatus includes:
a message receiving module, configured to: in a process in which the non-base station device STA performs wireless communication access authentication on the base station, receive a message that is sent by the base station and is used to indicate whether the base station supports a STA in using a temporary MAC address TMA; and
an authentication message sending module, configured to send an authentication message to the base station by using a TMA when the message received by the message receiving module is used to indicate that the base station supports a STA in using a TMA.

In a first possible implementation manner of the fourth aspect, the message is a discovery message, and the message receiving module is further configured to:
receive a discovery message sent by the base station at a predetermined time interval in a broadcast manner, where the discovery message includes a first indicator used to indicate whether the base station supports a STA in using a TMA.

With reference to the fourth aspect or the first possible implementation manner of the fourth aspect, in a second possible implementation manner, when the first indicator is used to indicate that the base station supports a STA in using a TMA, the discovery message further includes a generation rule used to instruct a STA to generate a TMA.

With reference to the fourth aspect, the first possible implementation manner of the fourth aspect, or the second possible implementation manner of the fourth aspect, in a third possible implementation manner, the authentication message sending module includes:
a first generation unit, configured to generate a TMA by using the generation rule when the first indicator is used to indicate that the base station supports a STA in using a TMA; and
an authentication message sending unit, configured to send the authentication message to the base station by using the TMA, so that the base station receives the authentication message, parses out the TMA by using the authentication message, and sends an authentication response message to the STA according to the authentication message, where the authentication response message is used to indicate whether the base station allows the STA to use the TMA for communication.

With reference to any one of the fourth aspect, or the first possible implementation manner of the fourth aspect to the third possible implementation manner of the fourth aspect, in a fourth possible implementation manner, the discovery message further includes a second indicator used to indicate whether the STA is required to upload a real MAC address RMA of the STA.

With reference to any one of the fourth aspect, or the first possible implementation manner of the fourth aspect to the fourth possible implementation manner of the fourth aspect, in a fifth possible implementation manner, the apparatus further includes:
a probe message sending module, configured to send a probe message to the base station by using a generated TMA, so that the base station parses out the TMA by using the probe message; when supporting a STA in using a TMA, the base station detects whether the TMA conflicts with a prestored TMA, where the prestored TMA includes a TMA used by each STA that performs wireless communication connection with the base station; if a detection result is that the TMA does not conflict with the prestored TMA, the base station sends, to the STA, a probe response message used to indicate that the STA is allowed to use the TMA for communication, so that the STA confirms using the TMA in subsequent communication; and if a detection result is that the TMA conflicts with the prestored TMA, the base station sends, to the STA, a probe response message used to indicate that the STA is not allowed to use the TMA for communication; and
the message is the probe response message, and the message receiving module is further configured to:
   receive the probe response message sent by the base station, where the probe response message includes a first indicator used to indicate whether the base station supports a STA in using a TMA.

With reference to any one of the fourth aspect, or the first possible implementation manner of the fourth aspect to the fifth possible implementation manner of the fourth aspect, in a sixth possible implementation manner, when the first indicator is used to indicate that the base station supports a STA in using a TMA, the probe response message further includes a generation rule used to instruct a STA to generate a TMA.

With reference to any one of the fourth aspect, or the first possible implementation manner of the fourth aspect to the sixth possible implementation manner of the fourth aspect, in a seventh possible implementation manner, the authentication message sending module includes:
a third determining unit, configured to: when the first indicator in the probe response message is used to indicate that the base station supports a STA in using a TMA, determine whether the probe response message is used to indicate that the STA is allowed to use the TMA in the probe message for communication;
an address confirmation unit, configured to: when a determining result of the third determining unit is that the probe response message is used to indicate that the STA is allowed to use the TMA in the probe message for communication, use the TMA in the probe message for communication; and
a second generation unit, configured to: when a determining result of the third determining unit is that the probe response message is used to indicate that the STA is not allowed to use the TMA in the probe message for communication, generate another TMA by using the generation rule, and send a probe message or an authentication message to the base station by using the generated TMA.

With reference to any one of the fourth aspect, or the first possible implementation manner of the fourth aspect to the seventh possible implementation manner of the fourth aspect, in an eighth possible implementation manner, the probe response message further includes a second indicator used to indicate whether the STA is required to upload an RMA of the STA.

With reference to any one of the fourth aspect, or the first possible implementation manner of the fourth aspect to the eighth possible implementation manner of the fourth aspect, in a ninth possible implementation manner, the apparatus further includes:
a response receiving module, configured to receive the authentication response message sent by the base station, where the authentication response message is an authentication response message that is sent by the base station to the STA according to the authentication message after the base station receives the authentication message sent by the STA, the base station parses out the TMA by using the authentication message, and the authentication response message is used to indicate whether the base station allows the STA to use the TMA for communication;
an address confirmation module, configured to: when the authentication response message is used to indicate that the STA is allowed to use the TMA for communication, confirm using the TMA in subsequent communication; and
a determining module, configured to: when the authentication response message is used to indicate that the STA is not allowed to use the TMA for communication, determine whether a quantity of times that the STA generates TMAs in current access authentication reaches a predetermined threshold; a third generation module, configured to: when a determining result of the determining module is that the quantity of times that the STA generates TMAs in the current access authentication does not reach the predetermined threshold, generate another TMA according to the generation rule, and send an authentication message to the base station by using the TMA; and an access termination module, configured to terminate the current access authentication when a determining result of the determining module is that the quantity of times that the STA generates TMAs in the current access authentication reaches the predetermined threshold.

With reference to any one of the fourth aspect, or the first possible implementation manner of the fourth aspect to the ninth possible implementation manner of the fourth aspect, in a tenth possible implementation manner, the apparatus further includes:
a fourth generation module, configured to exchange key signaling information with the base station, and generate, according to the key signaling information, a key shared with the base station; a first encryption module, configured to encrypt the RMA of the STA by using the key; and a first sending module, configured to send the encrypted RMA to the base station, so that the base station decrypts the encrypted RMA by using the key; or
a public key receiving module, configured to receive a public key sent by the base station, where the public key is generated by the base station; a second encryption module, configured to encrypt the RMA of the STA by using the public key; and a second sending module, configured to send the encrypted RMA to the base station, so that the base station decrypts the RMA by using a generated private key.

According to a fifth aspect, a temporary MAC address-based access system is provided, where the system includes a base station and at least one non-base station device STA;
the base station includes the temporary MAC address-based access apparatus described in any one of the third aspect or possible implementation manners of the third aspect; and
the STA includes the temporary MAC address-based access apparatus described in any one of the fourth aspect or possible implementation manners of the fourth aspect.

According to a sixth aspect, a base station is provided, where the base station includes a transmitter and a receiver, where
the transmitter is configured to: in a process in which a non-base station device STA performs wireless communication access authentication on the base station, send, to the STA, a message used to indicate whether the base station supports a STA in using a temporary MAC address TMA, so that the STA sends an authentication message to the base station according to the message, where the authentication message is an authentication message that is sent by the STA to the base station by using a TMA when the message is used to indicate that the base station supports a STA in using a TMA;
the receiver is configured to: receive the authentication message, and parse out the TMA by using the authentication message; and
the transmitter is further configured to send an authentication response message to the STA according to the authentication message, where the authentication response message is used to indicate whether the base station allows the STA to use the TMA for communication.

In a first possible implementation manner of the sixth aspect, the message is a discovery message, and the transmitter is further configured to:
send a discovery message at a predetermined time interval in a broadcast manner, where the discovery message includes a first indicator used to indicate whether the base station supports a STA in using a TMA.

With reference to the sixth aspect or the first possible implementation manner of the sixth aspect, in a second possible implementation manner, when the first indicator is used to indicate that the base station supports a STA in using a TMA, the discovery message further includes a generation rule used to instruct a STA to generate a TMA.

With reference to the sixth aspect, the first possible implementation manner of the sixth aspect, or the second possible implementation manner of the sixth aspect, in a third possible implementation manner, the discovery message further includes a second indicator used to indicate whether the STA is required to upload a real MAC address RMA of the STA.

With reference to any one of the sixth aspect, or the first possible implementation manner of the sixth aspect to the third possible implementation manner of the sixth aspect, in a fourth possible implementation manner, the receiver is further configured to receive a probe message sent by the STA by using a generated TMA; and
the message is a probe response message, and the transmitter is further configured to:
send a probe response message to the STA, where the probe response message includes a first indicator used to indicate whether the base station supports a STA in using a TMA.

With reference to any one of the sixth aspect, or the first possible implementation manner of the sixth aspect to the fourth possible implementation manner of the sixth aspect, in a fifth possible implementation manner, the apparatus further includes a processor, and
the processor is configured to parse out the TMA by using the probe message;
the processor is further configured to: when the base station supports a STA in using a TMA, determine whether the TMA conflicts with a prestored TMA, where the prestored TMA includes a TMA used by each STA that performs wireless communication connection with the base station;
the transmitter is further configured to: when a determining result of the processor is that the TMA does not conflict with the prestored TMA, send, to the STA, the probe response message used to indicate that the STA is allowed to use the TMA for communication, so that the STA confirms using the TMA in subsequent communication; and
the transmitter is further configured to: when a determining result of the processor is that the TMA conflicts with the prestored TMA, send, to the STA, the probe response message used to indicate that the STA is not allowed to use the TMA for communication.

With reference to any one of the sixth aspect, or the first possible implementation manner of the sixth aspect to the fifth possible implementation manner of the sixth aspect, in a sixth possible implementation manner, when the first indicator is used to indicate that the base station supports a STA in using a TMA, the probe response message further includes a generation rule used to instruct a STA to generate a TMA.

With reference to any one of the sixth aspect, or the first possible implementation manner of the sixth aspect to the sixth possible implementation manner of the sixth aspect, in a seventh possible implementation manner, the probe response message further includes a second indicator used to indicate whether the STA is required to upload a real MAC address RMA of the STA.

With reference to any one of the sixth aspect, or the first possible implementation manner of the sixth aspect to the seventh possible implementation manner of the sixth aspect, in an eighth possible implementation manner, the processor is further configured to: when the base station supports a STA in using a TMA, determine whether the TMA conflicts with the prestored TMA, where the prestored TMA includes a TMA used by each STA that performs wireless communication connection with the base station;
the transmitter is further configured to: when a determining result of the processor is that the TMA does not conflict with the prestored TMA, send, to the STA, an authentication response message used to indicate that the STA is allowed to use the TMA for communication, so that the STA confirms using the TMA in subsequent communication; and
the transmitter is further configured to: when a determining result of the processor is that the TMA conflicts with the prestored TMA, send, to the STA, an authentication response message used to indicate that the STA is not allowed to use the TMA for communication.

With reference to any one of the sixth aspect, or the first possible implementation manner of the sixth aspect to the eighth possible implementation manner of the sixth aspect, in a ninth possible implementation manner, the processor is further configured to: exchange key signaling information with the STA, and generate, according to the key signaling information, a key shared with the STA; the receiver is further configured to receive the RMA encrypted by the STA by using the key; and the processor is further configured to decrypt the encrypted RMA by using the key; or
the processor is further configured to generate a public key and a private key; the transmitter is further configured to send the public key to the STA; the receiver is further configured to receive the RMA encrypted by the STA by using the public key; and the processor is further configured to decrypt the encrypted RMA by using the private key.

With reference to any one of the sixth aspect, or the first possible implementation manner of the sixth aspect to the ninth possible implementation manner of the sixth aspect, in a tenth possible implementation manner, the processor is further configured to detect whether the RMA obtained by means of decryption exists in a prestored RMA list, where the prestored RMA list stores an RMA of a STA allowed to access the base station; and
the processor is further configured to: when a detection result is that the RMA obtained by means of decryption exists in the prestored RMA list, allow completing current access authentication.

According to a seventh aspect, a non-base station device STA is provided, where the STA includes: a receiver and a transmitter, where
the receiver is configured to: in a process in which the non-base station device STA performs wireless communication access authentication on a base station, receive a message that is sent by the base station and is used to indicate whether the base station supports a STA in using a temporary MAC address TMA; and
the transmitter is further configured to send an authentication message to the base station by using a TMA when the message received by the receiver is used to indicate that the base station supports a STA in using a TMA.

In a first possible implementation manner of the seventh aspect, the message is a discovery message, and the receiver is further configured to:
receive a discovery message sent by the base station at a predetermined time interval in a broadcast manner, where the discovery message includes a first indicator used to indicate whether the base station supports a STA in using a TMA.

With reference to the seventh aspect or the first possible implementation manner of the seventh aspect, in a second possible implementation manner, when the first indicator is used to indicate that the base station supports a STA in using a TMA, the discovery message further includes a generation rule used to instruct a STA to generate a TMA.

With reference to the seventh aspect, the first possible implementation manner of the seventh aspect, or the second possible implementation manner of the seventh aspect, in a third possible implementation manner, the STA further includes a processor, where
the processor is configured to generate a TMA by using the generation rule when the first indicator is used to indicate that the base station supports a STA in using a TMA; and
the transmitter is configured to send the authentication message to the base station by using the TMA, so that the base station receives the authentication message, parses out the TMA by using the authentication message, and sends an authentication response message to the STA according to the authentication message, where the authentication response message is used to indicate whether the base station allows the STA to use the TMA for communication.

With reference to any one of the seventh aspect, or the first possible implementation manner of the seventh aspect to the third possible implementation manner of the seventh aspect, in a fourth possible implementation manner, the discovery message further includes a second indicator used to indicate whether the STA is required to upload a real MAC address RMA of the STA.

With reference to any one of the seventh aspect, or the first possible implementation manner of the seventh aspect to the fourth possible implementation manner of the seventh aspect, in a fifth possible implementation manner, the transmitter is further configured to send a probe message to the base station by using a generated TMA, so that the base station parses out the TMA by using the probe message; when supporting a STA in using a TMA, the base station detects whether the TMA conflicts with a prestored TMA, where the prestored TMA includes a TMA used by each STA that performs wireless communication connection with the base station; if a detection result is that the TMA does not conflict with the prestored TMA, the base station sends, to the STA, a probe response message used to indicate that the STA is allowed to use the TMA for communication, so that the STA confirms using the TMA in subsequent communication; and if a detection result is that the TMA conflicts with the prestored TMA, the base station sends, to the STA, a probe response message used to indicate that the STA is not allowed to use the TMA for communication; and
the message is the probe response message, and the receiver is further configured to:
receive the probe response message sent by the base station, where the probe response message includes a first indicator used to indicate whether the base station supports a STA in using a TMA.

With reference to any one of the seventh aspect, or the first possible implementation manner of the seventh aspect to the fifth possible implementation manner of the seventh aspect, in a sixth possible implementation manner, when the first indicator is used to indicate that the base station supports a STA in using a TMA, the probe response message further includes a generation rule used to instruct a STA to generate a TMA.

With reference to any one of the seventh aspect, or the first possible implementation manner of the seventh aspect to the sixth possible implementation manner of the seventh aspect, in a seventh possible implementation manner, the processor is further configured to: when the first indicator in the probe response message is used to indicate that the base station supports a STA in using a TMA, determine whether the probe response message is used to indicate that the STA is allowed to use the TMA in the probe message for communication;
the processor is further configured to: when a determining result is that the probe response message is used to indicate that the STA is allowed to use the TMA in the probe message for communication, confirm using the TMA in subsequent communication, and the transmitter is further configured to send an authentication message to the base station by using the TMA; and
the processor is further configured to: when a determining result is that the probe response message is used to indicate that the STA is not allowed to use the TMA in the probe message for communication, generate another TMA by using the generation rule, and the transmitter is further configured to send an authentication message to the base station by using the generated TMA.

With reference to any one of the seventh aspect, or the first possible implementation manner of the seventh aspect to the seventh possible implementation manner of the seventh aspect, in an eighth possible implementation manner, the probe response message further includes a second indicator used to indicate whether the STA is required to upload an RMA of the STA.

With reference to any one of the seventh aspect, or the first possible implementation manner of the seventh aspect to the eighth possible implementation manner of the seventh aspect, in a ninth possible implementation manner, the receiver is further configured to receive the authentication response message sent by the base station, where the authentication response message is an authentication response message that is sent by the base station to the STA according to the authentication message after the base station receives the authentication message sent by the STA, the base station parses out the TMA by using the authentication message, and the authentication response message is used to indicate whether the base station allows the STA to use the TMA for communication;
the processor is further configured to: when the authentication response message is used to indicate that the STA is allowed to use the TMA for communication, confirm using the TMA in subsequent communication; and
the processor is further configured to: when the authentication response message is used to indicate that the STA is not allowed to use the TMA for communication, determine whether a quantity of times that the STA generates TMAs in current access authentication reaches a predetermined threshold; the processor is further configured to: when a determining result is that the quantity of times that the STA generates TMAs in the current access authentication does not reach the predetermined threshold, generate another TMA according to the generation rule, and trigger the transmitter to send an authentication message to the base station by using the TMA; and the processor is further configured to terminate the current access authentication when a determining result is that the quantity of times that the STA generates TMAs in the current access authentication reaches the predetermined threshold.

With reference to any one of the seventh aspect, or the first possible implementation manner of the seventh aspect to the ninth possible implementation manner of the seventh aspect, in a tenth possible implementation manner, the processor is further configured to exchange key signaling information with the base station, and generate, according to the key signaling information, a key shared with the base station; the processor is further configured to encrypt the RMA of the STA by using the key; and the transmitter is further configured to send the encrypted RMA to the base station, so that the base station decrypts the encrypted RMA by using the key; or
the receiver is further configured to receive a public key sent by the base station, where the public key is generated by the base station; the processor is further configured to encrypt the RMA of the STA by using the public key; and the transmitter is further configured to send the encrypted RMA to the base station, so that the base station decrypts the RMA by using a generated private key.

According to an eighth aspect, a temporary MAC address-based access system is provided, where the system includes a base station and at least one non-base station device STA;
the base station is the base station described in any one of the sixth aspect or possible implementation manners of the sixth aspect; and
the STA is the STA described in any one of the seventh aspect or possible implementation manners of the seventh aspect.

The technical solutions provided in the embodiments of the present invention have the following beneficial effects:

In a process in which a non-base station device STA performs wireless communication access authentication on a base station, the base station sends, to the STA, a message used to indicate whether the base station supports a STA in using a temporary MAC address TMA, thereby resolving a problem that a STA fails in normal communication easily caused because the STA continually performs access authentication on a base station by using a generated TMA when the base station does not support a STA in using a TMA. Because the base station may notify the STA whether the base station supports a STA in using a TMA, a case can be avoided in which access of the STA is rejected when the base station does not support a STA in using a TMA, thereby ensuring that the STA performs access authentication by using an RMA, and achieving an effect of wireless communication.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of an implementation environment involved in a temporary MAC address-based access method according to some embodiments of the present invention;
FIG. 2 is a method flowchart of a temporary MAC address-based access method according to an embodiment of the present invention;
FIG. 3A-1 and 3A-2 are a method flowchart of a temporary MAC address-based access method according to another embodiment of the present invention;

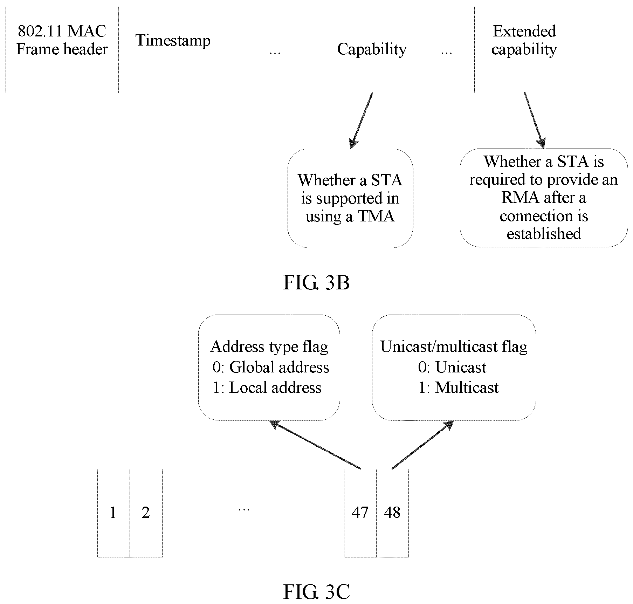

FIG. 3B is a schematic structural diagram of beacon signaling according to some embodiments of the present invention;
FIG. 3C is a schematic structural diagram of a MAC address according to some embodiments of the present invention;

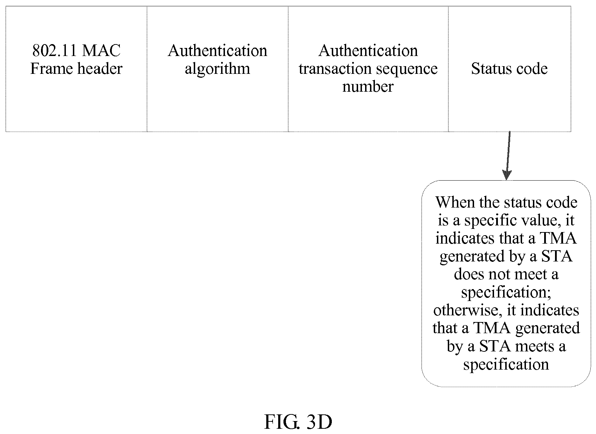

FIG. 3D is a schematic structural diagram of authentication response signaling according to some embodiments of the present invention;

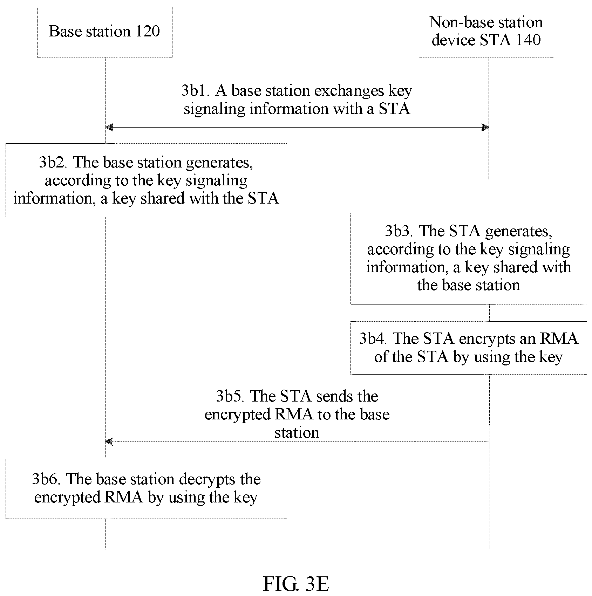

FIG. 3E is a flowchart of an RMA encryption and upload method according to an embodiment of the present invention;

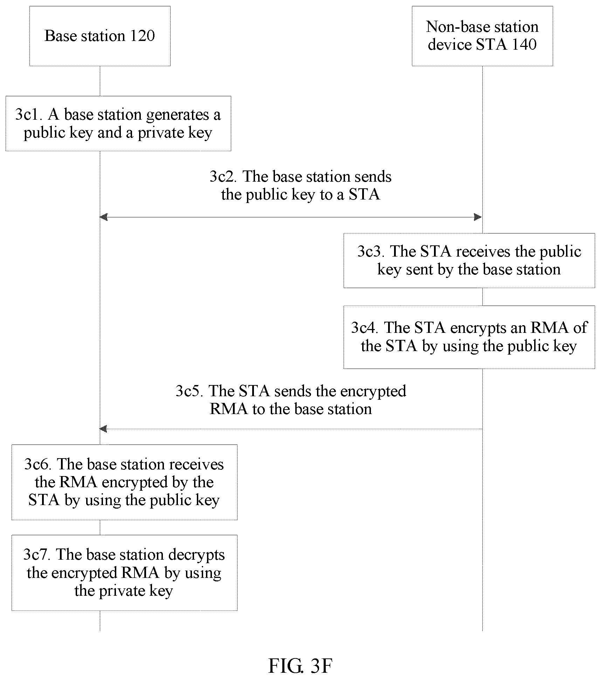

FIG. 3F is a flowchart of an RMA encryption and upload method according to another embodiment of the present invention;

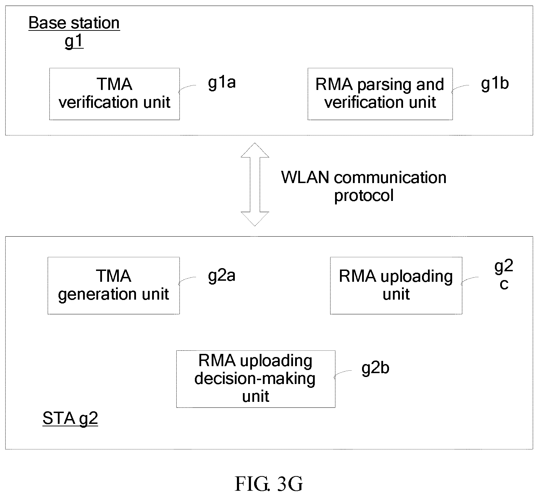

FIG. 3G is a schematic structural diagram of a base station and a STA according to an embodiment of the present invention;

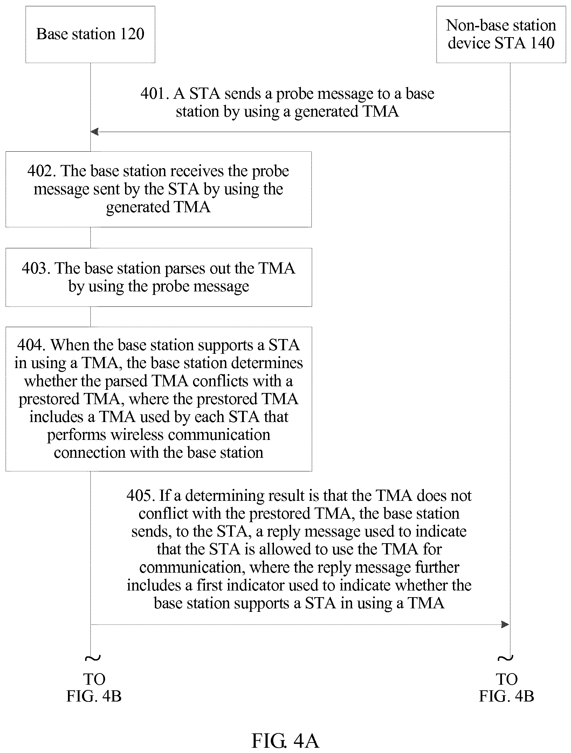

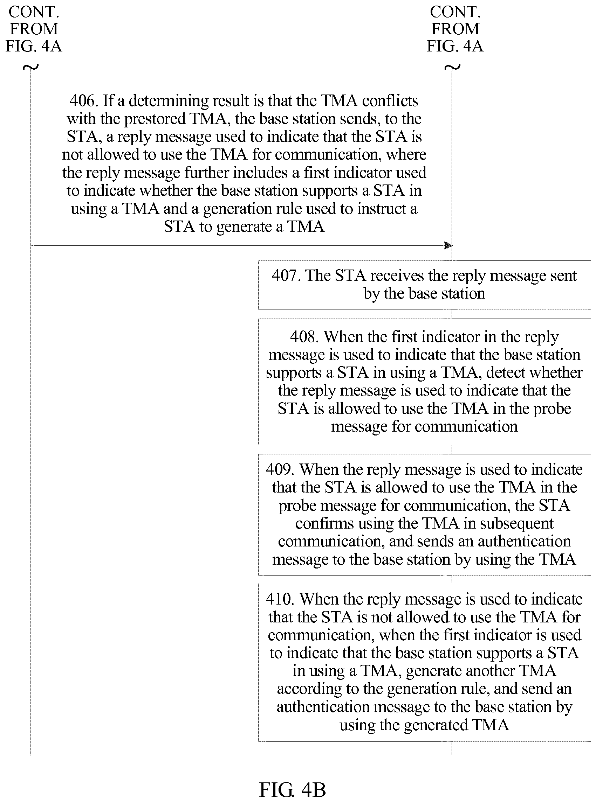

FIG. 4A and 4B are a method flowchart of a temporary MAC address-based access method according to still another embodiment of the present invention;

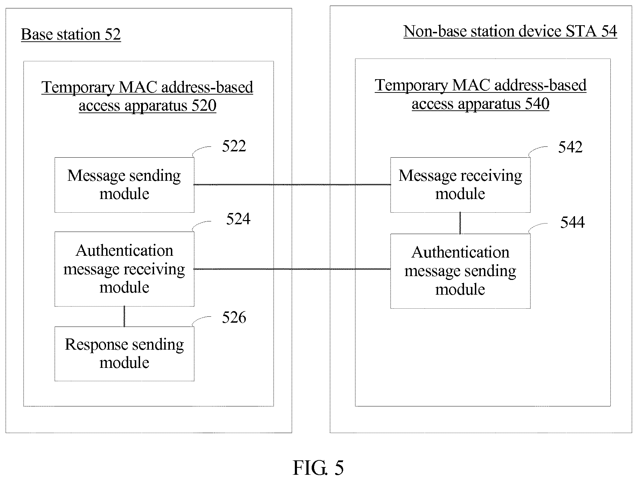

FIG. 5 is a schematic structural diagram of a temporary MAC address-based access system according to an embodiment of the present invention;

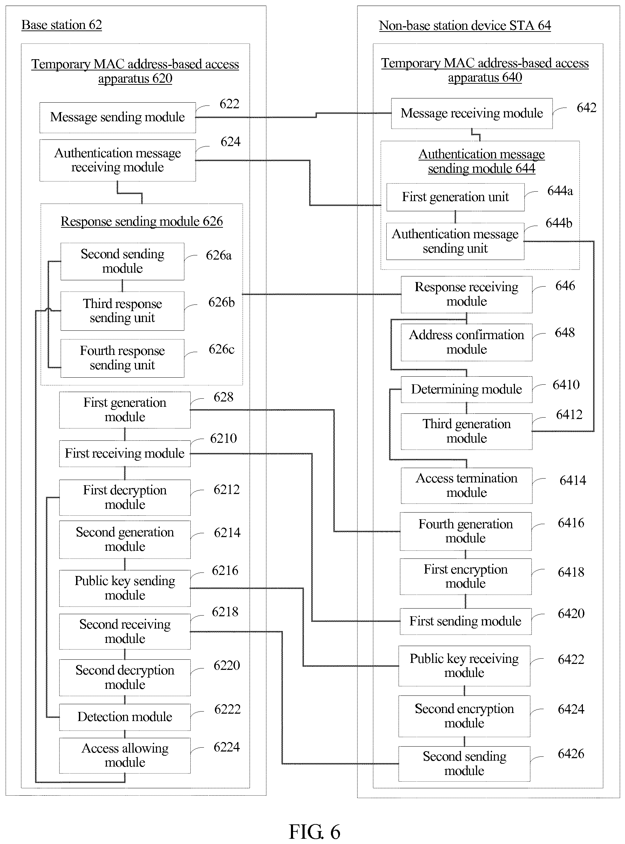

FIG. 6 is a schematic structural diagram of a temporary MAC address-based access system according to another embodiment of the present invention;

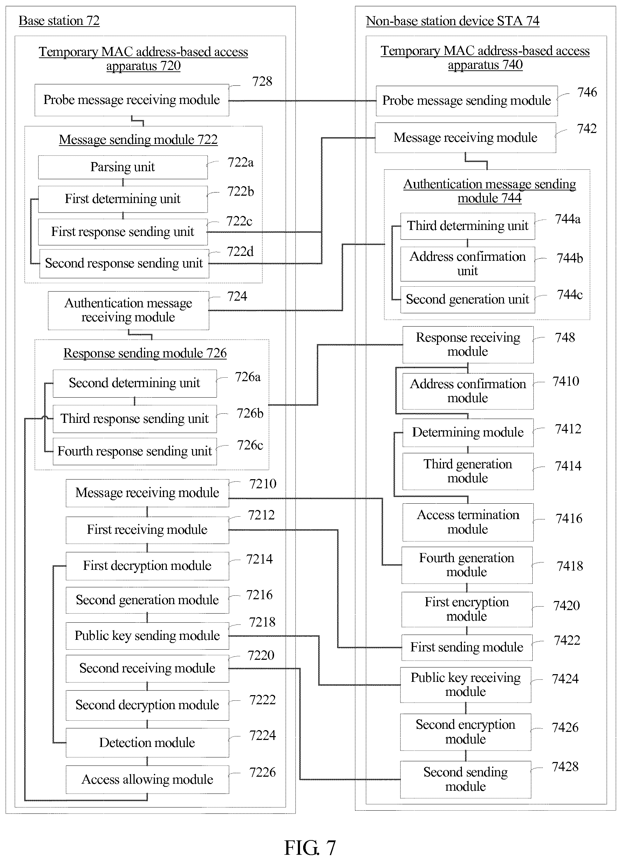

FIG. 7 is a schematic structural diagram of a temporary MAC address-based access system according to still another embodiment of the present invention;

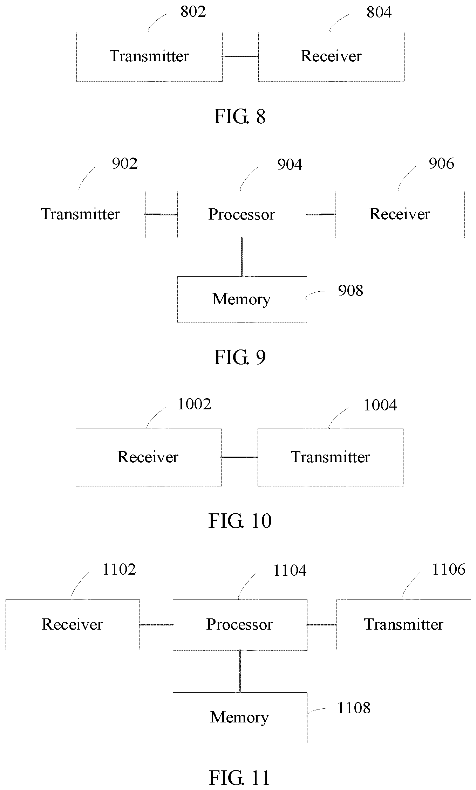

FIG. 8 is a schematic structural diagram of a base station according to an embodiment of the present invention;
FIG. 9 is a schematic structural diagram of a base station according to another embodiment of the present invention;
FIG. 10 is a schematic structural diagram of a STA according to an embodiment of the present invention;
FIG. 11 is a schematic structural diagram of a STA according to another embodiment of the present invention; and

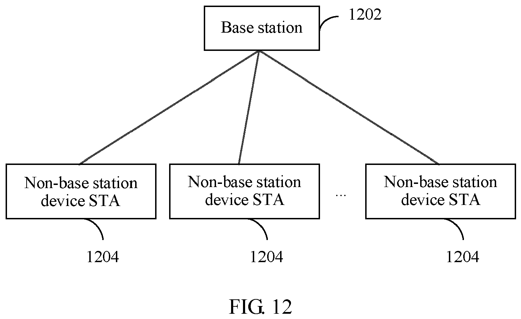

FIG. 12 is a schematic structural diagram of a temporary MAC address-based access system according to yet another embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

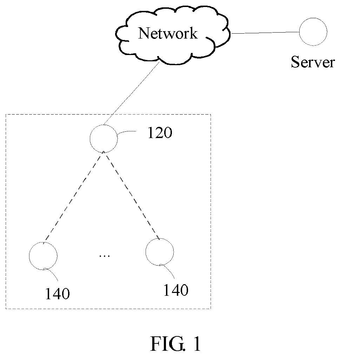

Referring to FIG. 1, FIG. 1 shows a schematic diagram of an implementation environment involved in a temporary MAC address-based access method according to some embodiments of the present invention. The implementation environment includes a base station AP 120 and at least one non-base station device STA 140.

The non-base station device STA 140 needs to first establish a connection with the base station AP 120 before communicating with another node on a network and another node on the Internet. In a wireless local area network, when one non-base station device STA 140 is to be connected to the base station AP 120, the non-base station device STA 140 needs to determine whether the base station AP 120 is in a communication range.

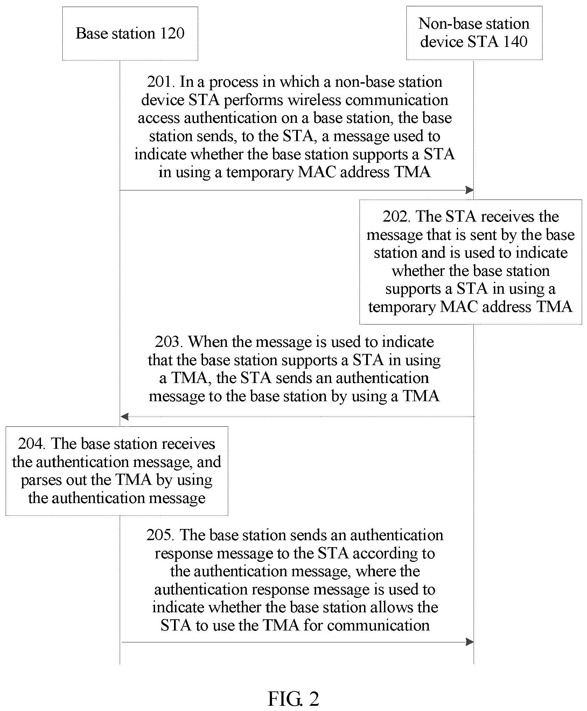

Referring to FIG. 2, FIG. 2 shows a method flowchart of a temporary MAC address-based access method according to an embodiment of the present invention. The temporary MAC address-based access method may be applied to the implementation environment shown in FIG. 1. The temporary MAC address-based access method may include the following steps:
201. In a process in which a non-base station device STA performs wireless communication access authentication on a base station, the base station sends, to the STA, a message used to indicate whether the base station supports a STA in using a temporary MAC address TMA.
202. The STA receives the message that is sent by the base station and is used to indicate whether the base station supports a STA in using a temporary MAC address TMA.
203. When the message is used to indicate that the base station supports a STA in using a TMA, the STA sends an authentication message to the base station by using a TMA.
204. The base station receives the authentication message, and parses out the TMA by using the authentication message.
205. The base station sends an authentication response message to the STA according to the authentication message, where the authentication response message is used to indicate whether the base station allows the STA to use the TMA for communication.

Step 201, step 204, and step 205 may be separately implemented as a temporary MAC address-based access method executed by the base station, and step 202 and step 203 may be independently implemented as a temporary MAC address-based access method executed by the STA.

In conclusion, according to the temporary MAC address-based access method provided in this embodiment of the present invention, in a process in which a non-base station device STA performs wireless communication access authentication on a base station, the base station sends, to the STA, a message used to indicate whether the base station supports a STA in using a temporary MAC address TMA, thereby resolving a problem that a STA fails in normal communication easily caused because the STA continually performs access authentication on a base station by using a generated TMA when the base station does not support a STA in using a TMA. Because the base station may notify the STA whether the base station supports a STA in using a TMA, a case can be avoided in which access of the STA is rejected when the base station does not support a STA in using a TMA, thereby ensuring that the STA performs access authentication by using an RMA, and achieving an effect of wireless communication.

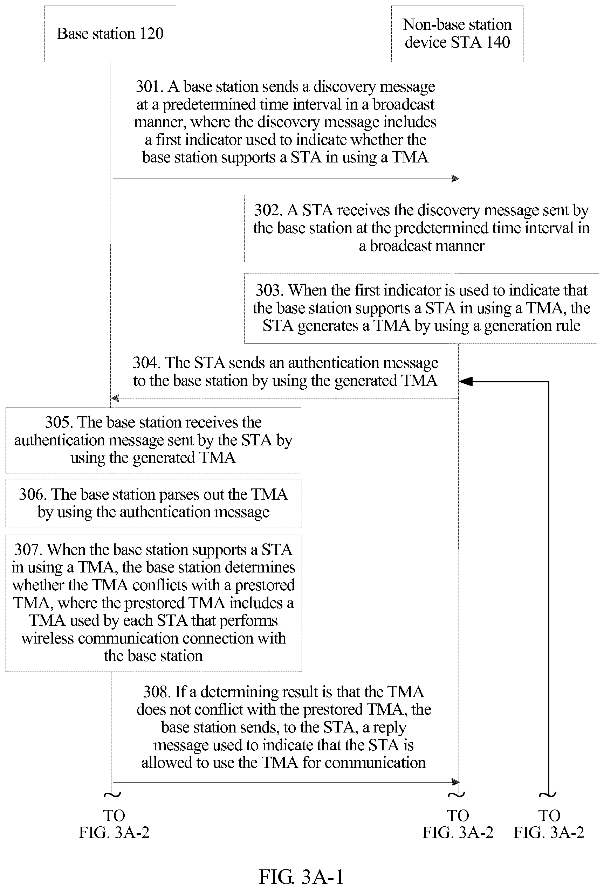

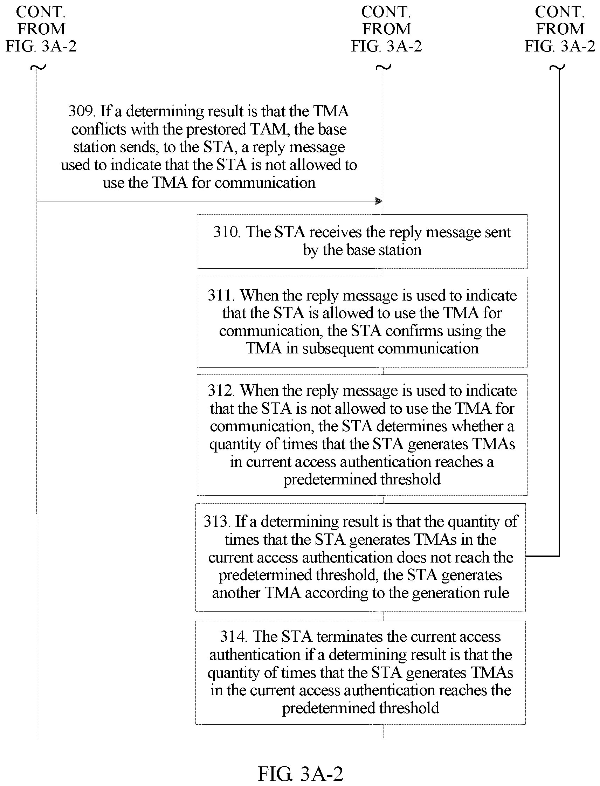

In a wireless local area network, when a STA is to be connected to a base station, the STA needs to determine whether the base station is in a communication range. Currently, there are two manners for determining whether a base station is in a communication range of a STA. One manner is a passive discovery manner: The STA listens, on a channel, to a discovery message (such as beacon signaling, beacon message) sent by the base station, and when discovering a target base station on a channel, the STA may send an authentication message (Authentication Request) to access the base station. In this passive discovery manner, when the STA performs wireless communication access authentication on the base station, operations that the base station and the STA need to execute are shown in FIG. 3A.

Referring to FIG. 3A, FIG. 3A shows a method flowchart of a temporary MAC address-based access method according to another embodiment of the present invention. The temporary MAC address-based access method may be applied to the implementation environment shown in FIG. 1. The temporary MAC address-based access method may include the following steps.

301. A base station sends a discovery message at a predetermined time interval in a broadcast manner, where the discovery message includes a first indicator used to indicate whether the base station supports a STA in using a TMA.

When the STA determines whether an AP is in a communication range of the STA, if a passive discovery manner is used, the base station sends a discovery message in a broadcast manner. In this way, a STA in a communication range of the base station may receive the discovery message.

In this case, the base station may indicate whether the STA is allowed to use a TMA. That is, the discovery message may include the first indicator used to indicate whether the base station supports a STA in using a TMA.

In a possible implementation manner, when the first indicator is used to indicate that the base station supports a STA in using a TMA, a value of the first indicator may be one of 1 or 0, and when the first indicator is used to indicate that the base station does not support a STA in using a TMA, a value of the first indicator may be the other of 1 or 0.

In an actual application, dedicated signaling is used to represent the discovery message, and the dedicated signaling is beacon signaling (beacon message) sent by the base station in a broadcast manner. The base station may indicate, to the STA by using a capability (Capability) field and an extended capability (Extended Capability) field in the beacon signaling, whether a temporary MAC address can be used in communication and whether the STA is required to upload a real MAC address. Referring to FIG. 3B, FIG. 3B shows a schematic structural diagram of beacon signaling according to some embodiments of the present invention. The beacon signaling may indicate, in a capability field, whether a STA is supported in using a TMA, and indicate, in an extended capability field, whether the STA is required to provide a real AMC address after a connection is established.

In a possible implementation manner, to facilitate access of the STA, the base station may send the message at the predetermined time interval in a broadcast manner. The predetermined time interval may be set according to an actual situation, and this embodiment sets no limitation thereto.

Generally, when the first indicator is used to indicate that the base station supports a STA in using a TMA, the discovery message may further include a generation rule used to instruct a STA to generate a TMA. The generation rule described herein may include a generation algorithm for generating a TMA, a range in which a TMA may be generated, and so on. For example, the AP may stipulate that the STA may randomly generate an address in a range of 0x400000000000 - 0x400000ffffff as a TMA.

Generally, a MAC address is a number of 48 bits. Referring to FIG. 3C, FIG. 3C shows a schematic structural diagram of a MAC address according to some embodiments of the present invention. Two most significant bits in the MAC address, that is, the 48^{th} bit and the 47^{th} bit are flag bits with special meanings. The 48^{th} bit is a unicast/multicast flag bit, when the flag bit is set to 0, it indicates that the address is a unicast address, and when the flag bit is set to 1, it indicates that the address is a multicast address. The 47^{th} bit is an address type flag bit, and when an address type flag is set to 0, it indicates that the address is a global address. That is, the address is globally unique. When the address type flag is set to 1, it indicates that the address is a local address, and the address may be unique in only a part, and is not globally unique. The rest 46 bits of the MAC address are address identifiers. The MAC address is managed by the IEEE and is sold to an equipment vendor in a manner of an address block. The equipment vendor allocates a global address to each device during device manufacture. When a TMA is being generated herein, the address type flag bit, that is, the 47^{th} bit of the TMA is generally set to 1.

302. A STA receives the discovery message sent by the base station at the predetermined time interval in a broadcast manner.

When the base station broadcasts the discovery message, if the STA is in the communication range of the base station, the STA may receive the discovery message broadcast by the base station in a broadcast manner.

303. When the first indicator is used to indicate that the base station supports a STA in using a TMA, the STA generates a TMA by using a generation rule.

When the first indicator in the discovery message is used to indicate that the base station supports a STA in using a TMA, the discovery message generally further carries the generation rule for generating a TMA. The STA may generate a TMA according to the TMA generation rule. That is, the STA generates, according to the generation algorithm for generating a TMA, a TMA in the range in which a TMA may be generated.

304. The STA sends an authentication message to the base station by using the generated TMA.

That is, a target MAC address of the authentication message is a MAC address of the base station, and a source MAC address of the authentication message is the TMA.

In a wireless communication protocol, the authentication message may be authentication signaling (Authentication Request).

305. The base station receives the authentication message sent by the STA by using the generated TMA.

306. The base station parses out the TMA by using the authentication message.

The base station may parses out the source MAC address in the authentication message, that is, the TMA generated by the STA.

307. When the base station supports a STA in using a TMA, the base station determines whether the TMA conflicts with a prestored TMA, where the prestored TMA includes a TMA used by each STA that performs wireless communication connection with the base station.

To ensure that MAC generated by the TMA meets a specification, the base station needs to perform determining on the TMA, that is, determines whether the TMA conflicts with the prestored TMA. The prestored TMA herein is a TMA that is used by a STA in the communication range of the base station. To avoid conflicting with TMAs of these STAs, the TMA needs to be compared with the TMAs of these STAs.

308. If a determining result is that the TMA does not conflict with the prestored TMA, the base station sends, to the STA, a reply message used to indicate that the STA is allowed to use the TMA for communication.

When detecting that the TMA of the STA does not conflict with a TMA used by another STA, the base station may deliver, to the STA, the reply message used to indicate that the STA is allowed to use the TMA for communication.

Commonly, in a wireless communication protocol, the reply message may be an authentication response message (Authentication Response) or another message.

309. If a determining result is that the TMA conflicts with the prestored TAM, the base station sends, to the STA, a reply message used to indicate that the STA is not allowed to use the TMA for communication.

When determining that the TMA of the STA does not conflict with a TMA used by another STA, the base station may deliver, to the STA, the reply message used to indicate that the STA is not allowed to use the TMA for communication. The reply message may be an authentication response message or another dedicated message.

Generally, a field may be added to the authentication response message, and a value in the field is used to indicate whether the STA is allowed to use the TMA for communication. For example, when authentication response signaling may be used as an authentication response message, a status code (Status Code) may be added to the authentication response signaling to notify the STA that initiates authentication that the TMA cannot be used. Referring to FIG. 3D, FIG. 3D shows a schematic structural diagram of authentication response signaling according to some embodiments of the present invention. When the status code equals a specific value (for example, one of 0 or 1), it indicates that the TMA generated by the STA does not meet a specification; otherwise, when the status code is another specific value (for example, the other of 0 or 1), it indicates that the TMA generated by the STA meets a specification.

310. The STA receives the reply message sent by the base station.

311. When the reply message is used to indicate that the STA is allowed to use the TMA for communication, the STA confirms using the TMA in subsequent communication.

The STA determines, according to a value of a field that is in the reply message (for example, the authentication response message) and is used to indicate whether the STA is allowed to use the TMA, whether the STA is allowed to use the TMA for communication. When the reply message (for example, the authentication response message) indicates that the STA is allowed to use the TMA for communication, the STA may continue to use the TMA for communication.

312. When the reply message is used to indicate that the STA is not allowed to use the TMA for communication, the STA determines whether a quantity of times that the STA generates TMAs in current access authentication reaches a predetermined threshold.

When the reply message, for example, the authentication response message, is used to indicate that the STA is not allowed to use the TMA for communication, it indicates that the TMA of the STA conflicts with the prestored TMA. Therefore, to continue to access the base station, the STA needs to regenerate a new TMA to perform access authentication. To prevent TMAs generated by the STA from always conflicting with the prestored TMA, the quantity of times that TMAs are generated needs to be detected before the new TMA is generated. When the quantity of times exceeds the predetermined threshold, the STA is stopped from continuing to access the AP.

313. If a determining result is that the quantity of times that the STA generates TMAs in the current access authentication does not reach the predetermined threshold, the STA generates another TMA according to the generation rule.

Further, the step of sending an authentication message to the base station by using a generated temporary MAC address TMA is executed again.

When the quantity of times that the STA generates TMAs in the current access authentication does not reach the predetermined threshold, the STA generates the another TMA according to the generation rule, and executes step 304 again until the current access authentication is completed or the current access authentication is terminated.

314. The STA terminates the current access authentication if a determining result is that the quantity of times that the STA generates TMAs in the current access authentication reaches the predetermined threshold.

When the determining result is that the quantity of times that the STA generates TMAs in the current access authentication reaches the predetermined threshold, it indicates that access of multiple times fails. In this case, the TMA is no longer used to access the base station.

In an actual application, according to a base station configuration or a system configuration, the discovery message may further include a second indicator used to indicate whether the STA is required to upload an RMA of the STA, that is, whether the base station requires the STA to upload the RMA. Apparently, when the base station requires the STA to upload the RMA, besides adding the second indicator to the discovery message, the base station may further independently sends, to the STA, a message used to indicate that the STA is required to upload the RMA. To avoid leakage of the RMA, the RMA may be encrypted before the STA uploads the RMA to the base station. In a possible implementation manner, in the temporary MAC address-based access method, the RMA may be encrypted in the following two manners:

In a first manner, referring to FIG. 3E, FIG. 3E shows a flowchart of an RMA encryption and upload method according to an embodiment of the present invention. The RMA encryption and upload method includes the following steps:
3b1. The base station exchanges key signaling information with the STA.
3b2. The base station generates, according to the key signaling information, a key shared with the STA.
3b3. The STA generates, according to the key signaling information, a key shared with the base station.
3b4. The STA encrypts the RMA of the STA by using the key.
3b5. The STA sends the encrypted RMA to the base station.
3b6. The base station decrypts the encrypted RMA by using the key.

In a second manner, referring to FIG. 3F, FIG. 3F shows a flowchart of an RMA encryption and upload method according to another embodiment of the present invention. The RMA encryption and upload method includes the following steps:
3c1. The base station generates a public key and a private key.
3c2. The base station sends the public key to the STA.
3c3. The STA receives the public key sent by the base station.
3c4. The STA encrypts the RMA of the STA by using the public key.
3c5. The STA sends the encrypted RMA to the base station.
3c6. The base station receives the RMA encrypted by the STA by using the public key.
3c7. The base station decrypts the encrypted RMA by using the private key.

In a possible implementation manner, according to a system configuration or a base station configuration, when allowing the STA to use a TMA that does not conflict with the prestored TMA, the base station may further first verify whether the RMA sent by the STA is qualified. That is, before the reply message used to indicate that the STA is allowed to use the TMA for communication is sent to the STA, the method may further include:
first, detecting whether the RMA obtained by means of decryption exists in a prestored RMA list, where the prestored RMA list stores an RMA of a STA allowed to access the base station; and
second, if a detection result is that the RMA obtained by means of decryption exists in the prestored RMA list, executing the step of sending, to the STA, a reply message used to indicate that the STA is allowed to use the TMA for communication.

Apparently, according to a base station configuration or a system configuration, after obtaining the RMA of the STA through decryption, the base station may directly store the RMA without using whether the RMA exists in the prestored RMA list as a basis of sending the discovery message.

In another possible implementation manner, if the STA successfully completes access authentication on the base station, in a subsequent communication process, to ensure data transmission security, a key may be further generated by using the RMA of the STA, and data that needs to be transmitted is encrypted according to the key.

In yet another possible implementation manner, to implement the temporary MAC address-based access method proposed in the present invention, specific units may be disposed in both the base station and the STA. Referring to FIG. 3G, FIG. 3G shows a schematic structural diagram of a base station and a STA according to an embodiment of the present invention. Abase station g1 may include a TMA verification unit g1a and an RMA parsing and verification unit g1b, and a STA g2 may include a TMA generation unit g2a, an RMA upload decision-making unit g2b, and an RMA uploading unit g2c. The TMA verification unit g1a may execute the foregoing step 307, and the RMA parsing and verification unit g1b may execute a step of detecting whether the RMA obtained by means of decryption exists in a prestored RMA list. The TMA generation unit g2a may execute the foregoing step 303 and step 313, the RMA upload decision-making unit g2b may be configured to make a decision about whether to upload an RMA in an encryption manner, and the RMA uploading unit g2c may upload the RMA to the base station g1.

It should be additionally noted that, when the base station does not support a STA in using a TMA, the first indicator carried in the discovery message is used to indicate that a STA is not supported in using a TMA. In this case, the discovery message may not carry the generation rule for generating a TMA. In this way, after learning the first indicator, the STA does not generate a TMA. In this case, if the STA determines that the STA still needs to continue to access the base station, the STA may access the base station by using an RMA. Because the RMA is easily leaked, the STA may generate reminder information, so as to remind a user that the RMA needs to be provided to access the base station and further a threat is posed to privacy. If the user agrees to provide the RMA, the STA may continue to access the base station by using the RMA; otherwise, the STA does not initiate a network access request to the base station.

In addition, when the base station indicates, in the discovery message, that a WLAN device STA is required to provide the RMA, the STA may also determine, according to a system configuration provided by the STA, whether to access the base station and to provide the RMA.

It should be further additionally noted that, the foregoing step 301 and step 305 to step 309 may be independently implemented as a temporary MAC address-based access method executed by the base station, and the foregoing step 302 to step 304 and step 310 to step 314 may be independently implemented as a temporary MAC address-based access method executed by the STA.

In conclusion, according to the temporary MAC address-based access method provided in this embodiment of the present invention, in a process in which a non-base station device STA performs wireless communication access authentication on a base station, the base station sends, to the STA, a message used to indicate whether the base station supports a STA in using a temporary MAC address TMA, thereby resolving a problem that a STA fails in normal communication easily caused because the STA continually performs access authentication on a base station by using a generated TMA when the base station does not support a STA in using a TMA. Because the base station may notify the STA whether the base station supports a STA in using a TMA, a case can be avoided in which access of the STA is rejected when the base station does not support a STA in using a TMA, thereby ensuring that the STA performs access authentication by using an RMA, and achieving an effect of wireless communication.

In a wireless local area network, when a STA is to be connected to a base station, the STA needs to determine whether the base station is in a communication range. Currently, there are two manners for determining whether a base station is in a communication range of a STA. The other manner is an active manner: The STA actively sends a probe message (Probe Request) on a channel. If a target base station receives probe signaling, the base station responds with a probe response message (Probe Response), and content of the probe response message is similar to that of the discovery message. After receiving the probe response message, the STA may determine, according to the content of the probe response message, whether to access the discovered base station. In this active discovery manner, when the STA performs wireless communication access authentication on the base station, operations that the base station and the STA need to execute are shown in FIG. 4A and 4B.

Referring to FIG. 4A and 4B, FIG. 4A and 4B are a method flowchart of a temporary MAC address-based access method according to still another embodiment of the present invention. The temporary MAC address-based access method may be applied to the implementation environment shown in FIG. 1. When a STA performs wireless communication access authentication on a base station, the temporary MAC address-based access method may include the following steps.

401. The STA sends a probe message to the base station by using a generated TMA.

The TMA herein is generally an existing TMA of the STA or a randomly-generated TMA, and the STA actively sends the probe message to the base station by using the TMA, that is, uses the TMA as a source MAC address of the probe message.

In an actual application, in a wireless communication protocol, the probe message may be dedicated signaling, that is, probe signaling (Probe Request).

402. The base station receives the probe message sent by the STA by using the generated TMA.

403. The base station parses out the TMA by using the probe message.

The base station may parse out the source MAC address in the probe message, that is, the TMA of the STA.

If the base station allows the STA to use the TMA for communication, step 404 may be executed; otherwise, a probe response message is directly sent to the STA, and the probe response message carries a first indicator used to indicate that a STA is not supported in using a TMA.

404. When the base station supports a STA in using a TMA, the base station determines whether the parsed TMA conflicts with a prestored TMA, where the prestored TMA includes a TMA used by each STA that performs wireless communication connection with the base station.

405. If a determining result is that the TMA does not conflict with the prestored TMA, the base station sends, to the STA, a reply message used to indicate that the STA is allowed to use the TMA for communication, where the reply message further includes a first indicator used to indicate whether the base station supports a STA in using a TMA.

The reply message described herein may be a probe response message or another message.

Because the STA actively sends the probe message to the base station, the base station needs to notify the STA whether the STA is allowed to use the TMA. When the STA is allowed to use the TMA, if it is detected that the TMA in the probe message does not conflict with the prestored TMA, it indicates that the STA may directly use the TMA. In this case, the base station may directly send, to the STA, the reply message used to indicate that the STA is allowed to use the TMA for communication.

In an actual application, for the probe signaling, dedicated signaling is used to represent the probe response message, and the dedicated signaling is test reply signaling (Probe Response).

406. If a determining result is that the TMA conflicts with the prestored TMA, the base station sends, to the STA, a reply message used to indicate that the STA is not allowed to use the TMA for communication, where the reply message further includes a first indicator used to indicate whether the base station supports a STA in using a TMA and a generation rule used to instruct a STA to generate a TMA.

Similarly, the reply message described herein may be a probe response message or another message.

Because in step 404, determining is performed when the base station supports a STA in using a TMA, the first indicator carried in the reply message in step 405 is used to indicate that the base station supports a STA in using a TMA. That is, if the base station supports a STA in using a TMA and it is detected that the TMA in the probe message does not conflict with the prestored TMA, the base station directly sends, to the STA, the reply message used to indicate that the STA is allowed to use the TMA for communication, and the first indicator carried in the reply message is used to indicate that the base station supports a STA in using a TMA. If the base station allows the STA to use a TMA and it is detected that the TMA in the probe message conflicts with the prestored TMA, the base station sends, to the STA, the reply message used to indicate that the STA is not allowed to use the TMA for communication, and the reply message further carries the first indicator used to indicate whether the base station supports a STA in using a TMA (in this case, the first indicator is used to indicate that the base station supports a STA in using a TMA), the generation rule used to instruct a STA to generate a TMA, and so on.

407. The STA receives the reply message sent by the base station.

The reply message may be the probe response message fed back by the base station or another message sent by the base station.

Apparently, the reply message carries the first indicator used to indicate whether the base station supports a STA in using a TMA, and when the first indicator is used to indicate that the base station supports a STA in using a TMA, the reply message further includes the generation rule used to instruct a STA to generate a TMA.

408. When the first indicator in the reply message is used to indicate that the base station supports a STA in using a TMA, detect whether the reply message is used to indicate that the STA is allowed to use the TMA in the probe message for communication.

409. When the reply message is used to indicate that the STA is allowed to use the TMA in the probe message for communication, the STA confirms using the TMA in subsequent communication, and sends an authentication message to the base station by using the TMA.

410. When the reply message is used to indicate that the STA is not allowed to use the TMA for communication, when the first indicator is used to indicate that the base station supports a STA in using a TMA, generate another TMA according to the generation rule, and send an authentication message to the base station by using the generated TMA.

When the reply message is used to indicate that the STA is not allowed to use the TMA for communication, it indicates that the TMA of the STA conflicts with the prestored TMA. Therefore, the STA needs to regenerate a new TMA. To prevent TMAs generated by the STA from always conflicting with the prestored TMA, a quantity of times that TMAs are generated needs to be detected before the new TMA is generated. When the quantity of times exceeds a predetermined threshold, the STA is stopped from continuing to access the base station.

In a possible implementation manner, when the reply message is used to indicate that the STA is not allowed to use the TMA for communication, the STA may further first determine whether a quantity of times that the STA generates TMAs in current access authentication reaches a predetermined threshold. If a determining result is that the quantity of times that the STA generates TMAs in the current access authentication does not reach the predetermined threshold, the STA generates the another TMA according to the generation rule, and sends the authentication message to the base station by using the generated TMA. When the quantity of times that the STA generates TMAs in the current access authentication does not reach the predetermined threshold, the STA generates another TMA according to the generation rule, and continues to send an authentication message until the current access authentication is completed or the access authentication is terminated.

It should be noted that, the authentication message described herein is the same as the authentication message in step 304 described in FIG. 3A, and after step 409 or step 410, the base station may execute step 305 described in FIG. 3A again after receiving the authentication message sent by the STA.

In an actual application, according to a base station configuration or a system configuration, the reply message may further include a second indicator used to indicate whether the STA is required to upload an RMA of the STA, that is, whether the base station requires the STA to upload the RMA. To avoid leakage of the RMA, the RMA may be encrypted before the STA uploads the RMA to the base station. In a possible implementation manner, in the temporary MAC address-based access method, the RMA may be encrypted in two manners. Reference may be made to descriptions on FIG. 3E and FIG. 3F separately, and details are not described herein again.

In a possible implementation manner, according to a system configuration or a base station configuration, when allowing the STA to use a TMA that does not conflict with the prestored TMA, the base station may further first verify whether the RMA sent by the STA is qualified. That is, before the reply message used to indicate that the STA is allowed to use the TMA for communication is sent to the STA, the method may further include:
first, detecting whether the RMA obtained by means of decryption exists in a prestored RMA list, where the prestored RMA list stores an RMA of a STA allowed to access the base station; and
second, if a detection result is that the RMA obtained by means of decryption exists in the prestored RMA list, executing the step of sending, to the STA, a reply message used to indicate that the STA is allowed to use the TMA for communication.

Apparently, after obtaining the RMA of the STA through decryption, the base station may directly store the RMA without using whether the RMA is in the prestored RMA list as a basis of sending the reply message.

In another possible implementation manner, if the STA successfully completes access authentication on the base station, in a subsequent communication process, to ensure data transmission security, a key may be further generated by using the RMA of the STA, and data that needs to be transmitted is encrypted according to the key.

It should be additionally noted that, when the base station does not support a STA in using a TMA, the first indicator carried in the reply message is used to indicate that a STA is not supported in using a TMA. In this case, the reply message may not carry the generation rule for generating a TMA. In this way, after learning the first indicator, the STA does not generate a TMA. In this case, if the STA determines that the STA still needs to continue to access the base station, the STA may access the base station by using an RMA. Because the RMA is easily leaked, the STA may generate reminder information, so as to remind a user that the RMA needs to be provided to access the base station and further a threat is posed to privacy. If the user agrees to provide the RMA, the STA may continue to access the base station by using the RMA; otherwise, the STA does not initiate a network access request to the base station.

In addition, when the base station indicates, in the reply message, that a WLAN device STA is required to provide the RMA, the STA may also determine, according to a system configuration provided by the STA, whether to access the base station and to provide the RMA.

In conclusion, according to the temporary MAC address-based access method provided in this embodiment of the present invention, in a process in which a non-base station device STA performs wireless communication access authentication on a base station, the base station sends, to the STA, a message used to indicate whether the base station supports a STA in using a temporary MAC address TMA, thereby resolving a problem that a STA fails in normal communication easily caused because the STA continually performs access authentication on a base station by using a generated TMA when the base station does not support a STA in using a TMA. Because the base station may notify the STA whether the base station supports a STA in using a TMA, a case can be avoided in which access of the STA is rejected when the base station does not support a STA in using a TMA, thereby ensuring that the STA performs access authentication by using an RMA, and achieving an effect of wireless communication.

Referring to FIG. 5, FIG. 5 shows a schematic structural diagram of a temporary MAC address-based access system according to an embodiment of the present invention. The system may be applied to the implementation environment shown in FIG. 1. The system may include a base station 52 and at least one non-base station device STA 54, the base station 52 includes a temporary MAC address-based access apparatus 520, and the STA 54 includes a temporary MAC address-based access apparatus 540.

The temporary MAC address-based access apparatus 520 in the base station 52 may include: a message sending module 522, an authentication message receiving module 524, and a response sending module 526.

The message sending module 522 may be configured to: in a process in which the non-base station device STA performs wireless communication access authentication on the base station, send, to the STA, a message used to indicate whether the base station supports a STA in using a temporary MAC address TMA, so that the STA sends an authentication message to the base station according to the message, where the authentication message is an authentication message that is sent by the STA to the base station by using a TMA when the message is used to indicate that the base station supports a STA in using a TMA.

The authentication message receiving module 524 is configured to: receive the authentication message, and parse out the TMA by using the authentication message.

The response sending module 526 is configured to send an authentication response message to the STA according to the authentication message received by the authentication message receiving module 524, where the authentication response message is used to indicate whether the base station allows the STA to use the TMA for communication.

The temporary MAC address-based access apparatus 540 in the STA 54 may include a message receiving module 542 and an authentication message sending module 544.

The message receiving module 542 is configured to: in the process in which the non-base station device STA performs wireless communication access authentication on the base station, receive the message that is sent by the base station and is used to indicate whether the base station supports a STA in using a temporary MAC address TMA.

The authentication message sending module 544 is configured to: when the message received by the message receiving module 542 is used to indicate that the base station supports a STA in using a TMA, send the authentication message to the base station by using a TMA.

In an actual application, the base station 52 with the foregoing apparatus 520 may independently implement the temporary MAC address-based access method, and the non-base station device 54 with the foregoing apparatus 540 may also independently implement the temporary MAC address-based access method.

In conclusion, according to the temporary MAC address-based access system provided in this embodiment of the present invention, in a process in which a non-base station device STA performs wireless communication access authentication on a base station, the base station sends, to the STA, a message used to indicate whether the base station supports a STA in using a temporary MAC address TMA, thereby resolving a problem that a STA fails in normal communication easily caused because the STA continually performs access authentication on a base station by using a generated TMA when the base station does not support a STA in using a TMA. Because the base station may notify the STA whether the base station supports a STA in using a TMA, a case can be avoided in which access of the STA is rejected when the base station does not support a STA in using a TMA, thereby ensuring that the STA performs access authentication by using an RMA, and achieving an effect of wireless communication.

Referring to FIG. 6, FIG. 6 shows a schematic structural diagram of a temporary MAC address-based access system according to another embodiment of the present invention. The system may be applied to the implementation environment shown in FIG. 1. The system may include a base station 62 and at least one non-base station device STA 64, the base station 62 includes a temporary MAC address-based access apparatus 620, and the STA 64 includes a temporary MAC address-based access apparatus 640.

For the base station 62, in a first possible implementation manner in the embodiment shown in FIG. 6, the temporary MAC address-based access apparatus 620 in the base station 62 may include: a message sending module 622, an authentication message receiving module 624, and a response sending module 626.

The message sending module 622 may be configured to: in a process in which the non-base station device STA performs wireless communication access authentication on the base station, send, to the STA, a message used to indicate whether the base station supports a STA in using a temporary MAC address TMA, so that the STA sends an authentication message to the base station according to the message, where the authentication message is an authentication message that is sent by the STA to the base station by using a TMA when the message is used to indicate that the base station supports a STA in using a TMA.

The authentication message receiving module 624 may be configured to: receive the authentication message, and parse out the TMA by using the authentication message.

The response sending module 626 may be configured to send an authentication response message to the STA according to the authentication message received by the authentication message receiving module 624, where the authentication response message is used to indicate whether the base station allows the STA to use the TMA for communication.

In a second possible implementation manner in the embodiment shown in FIG. 6, the message is a discovery message, and the message sending module 622 may be further configured to:
send a discovery message at a predetermined time interval in a broadcast manner, where the discovery message includes a first indicator used to indicate whether the base station supports a STA in using a TMA.

In a third possible implementation manner in the embodiment shown in FIG. 6, when the first indicator is used to indicate that the base station supports a STA in using a TMA, the discovery message further includes a generation rule used to instruct a STA to generate a TMA.

In a fourth possible implementation manner in the embodiment shown in FIG. 6, the discovery message further includes a second indicator used to indicate whether the STA is required to upload a real MAC address RMA of the STA.

In a fifth possible implementation manner in the embodiment shown in FIG. 6, the response sending module 626 may include: a second determining unit 626a, a third response sending unit 626b, and a fourth response sending unit 626c.

The second determining unit 626a may be configured to: when the base station supports a STA in using a TMA, determine whether the TMA conflicts with a prestored TMA, where the prestored TMA includes a TMA used by each STA that performs wireless communication connection with the base station.

The third response sending unit 626b may be configured to: when a determining result of the second determining unit 626a is that the TMA does not conflict with the prestored TMA, send, to the STA, an authentication response message used to indicate that the STA is allowed to use the TMA for communication, so that the STA confirms using the TMA in subsequent communication.

The fourth response sending unit 626c may be configured to: when a determining result of the second determining unit 626a is that the TMA conflicts with the prestored TMA, send, to the STA, an authentication response message used to indicate that the STA is not allowed to use the TMA for communication.

In a sixth possible implementation manner in the embodiment shown in FIG. 6, the temporary MAC address-based access apparatus 620 further includes: a first generation module 628, a first receiving module 6210, and a first decryption module 6212, or a second generation module 6214, a public key sending module 6216, a second receiving module 6218, and a second decryption module 6220.

The first generation module 628 may be configured to: exchange key signaling information with the STA, and generate, according to the key signaling information, a key shared with the STA; the first receiving module 6210 may be configured to receive the RMA encrypted by the STA by using the key; and the first decryption module 6212 may be configured to decrypt the encrypted RMA by using the key; or
the second generation module 6214 may be configured to generate a public key and a private key; the public key sending module 6216 may be configured to send the public key to the STA; the second receiving module 6218 may be configured to receive the RMA encrypted by the STA by using the public key; and the second decryption module 6220 may be configured to decrypt the encrypted RMA by using the private key.

In a seventh possible implementation manner in the embodiment shown in FIG. 6, the temporary MAC address-based access apparatus 620 may further include: a detection module 6222 and an access allowing module 6224.

The detection module 6222 may be configured to detect whether the RMA obtained by means of decryption exists in a prestored RMA list, where the prestored RMA list stores an RMA of a STA allowed to access the base station.

The access allowing module 6224 may be configured to: when a detection result of the detection module 6222 is that the RMA obtained by means of decryption exists in the prestored RMA list, allow completing current access authentication.

Correspondingly, for the STA 64, in an eighth possible implementation manner in the embodiment shown in FIG. 6, the temporary MAC address-based access apparatus 640 in the STA 64 may include: a message receiving module 642 and an authentication message sending module 644.

The message receiving module 642 may be configured to: in a process in which the non-base station device STA performs wireless communication access authentication on the base station, receive a message that is sent by the base station and is used to indicate whether the base station supports a STA in using a temporary MAC address TMA.

The authentication message sending module 644 may be configured to: when the message received by the message receiving module 642 is used to indicate that the base station supports a STA in using a TMA, send an authentication message to the base station by using a TMA.

In a ninth possible implementation manner in the embodiment shown in FIG. 6, the message is a discovery message, and the message receiving module 642 may be further configured to:
receive a discovery message sent by the base station at a predetermined time interval in a broadcast manner, where the discovery message includes a first indicator used to indicate whether the base station supports a STA in using a TMA.

In a tenth possible implementation manner in the embodiment shown in FIG. 6, when the first indicator is used to indicate that the base station supports a STA in using a TMA, the discovery message further includes a generation rule used to instruct a STA to generate a TMA.

In an eleventh possible implementation manner in the embodiment shown in FIG. 6, the authentication message sending module 644 may include: a first generation unit 644a and an authentication message sending unit 644b.

The first generation unit 644a may be configured to generate a TMA by using the generation rule when the first indicator is used to indicate that the base station supports a STA in using a TMA.

The authentication message sending unit 644b may be configured to send an authentication message to the base station by using the TMA, so that the base station receives the authentication message, parses out the TMA by using the authentication message, and sends the authentication response message to the STA according to the authentication message, where the authentication response message is used to indicate whether the base station allows the STA to use the TMA for communication.

In a twelfth possible implementation manner in the embodiment shown in FIG. 6, the discovery message further includes a second indicator used to indicate whether the STA is required to upload a real MAC address RMA of the STA.

In a thirteenth possible implementation manner in the embodiment shown in FIG. 6, the temporary MAC address-based access apparatus 640 may further include: a response receiving module 646, an address confirmation module 648, a determining module 6410, a third generation module 6412, and an access termination module 6414.

The response receiving module 646 may be configured to receive the authentication response message sent by the base station, where the authentication response message is an authentication response message that is sent by the base station to the STA according to the authentication message after the base station receives the authentication message sent by the STA, the base station parses out the TMA by using the authentication message, and the authentication response message is used to indicate whether the base station allows the STA to use the TMA for communication.

The address confirmation module 648 may be configured to: when the authentication response message is an authentication response message used to indicate that the STA is allowed to use the TMA for communication, confirm using the TMA in subsequent communication.

The determining module 6410 may be configured to: when the authentication response message is an authentication response message used to indicate that the STA is not allowed to use the TMA for communication, determine whether a quantity of times that the STA generates TMAs in current access authentication reaches a predetermined threshold; the third generation module 6412 is configured to: when a determining result of the determining module 6410 is that the quantity of times that the STA generates TMAs in the current access authentication does not reach the predetermined threshold, generate another TMA according to the generation rule, and send an authentication message to the base station by using the TMA; and the access termination module 6414 is configured to terminate the current access authentication when a determining result of the determining module 6410 is that the quantity of times that the STA generates TMAs in the current access authentication reaches the predetermined threshold.

In a thirteenth possible implementation manner in the embodiment shown in FIG. 6, the temporary MAC address-based access apparatus 640 may further include: a fourth generation module 6416, a first encryption module 6418, and a first sending module 6420, or a public key receiving module 6422, a second encryption module 6424, and a second sending module 6426.

The fourth generation module 6416 may be configured to exchange key signaling information with the base station, and generate, according to the key signaling information, a key shared with the base station; the first encryption module 6418 may be configured to encrypt the RMA of the STA by using the key; and the first sending module 6420 may be configured to send the encrypted RMA to the base station, so that the base station decrypts the encrypted RMA by using the key; or
the public key receiving module 6422 may be configured to receive a public key sent by the base station, where the public key is generated by the base station; the second encryption module 6424 may be configured to encrypt the RMA of the STA by using the public key; and the second sending module 6426 may be configured to send the encrypted RMA to the base station, so that the base station decrypts the RMA by using a generated private key.

In an actual application, the base station 62 with the foregoing apparatus 620 may independently implement the temporary MAC address-based access method, and the non-base station device STA 64 with the foregoing apparatus 640 may also independently implement the temporary MAC address-based access method.

In conclusion, according to the temporary MAC address-based access system provided in this embodiment of the present invention, in a process in which a non-base station device STA performs wireless communication access authentication on a base station, the base station sends, to the STA, a message used to indicate whether the base station supports a STA in using a temporary MAC address TMA, thereby resolving a problem that a STA fails in normal communication easily caused because the STA continually performs access authentication on a base station by using a generated TMA when the base station does not support a STA in using a TMA. Because the base station may notify the STA whether the base station supports a STA in using a TMA, a case can be avoided in which access of the STA is rejected when the base station does not support a STA in using a TMA, thereby ensuring that the STA performs access authentication by using an RMA, and achieving an effect of wireless communication.

Referring to FIG. 7, FIG. 7 shows a schematic structural diagram of a temporary MAC address-based access system according to still another embodiment of the present invention. The system may be applied to the implementation environment shown in FIG. 1. The system may include a base station 72 and at least one non-base station device STA 74, the base station 72 includes a temporary MAC address-based access apparatus 720, and the STA 74 also includes a temporary MAC address-based access apparatus 740.

For the base station 72, in a first possible implementation manner in the embodiment shown in FIG. 7, the temporary MAC address-based access apparatus 720 in the base station 72 may include: a message sending module 722, an authentication message receiving module 724, and a response sending module 726.

The message sending module 722 may be configured to: in a process in which the non-base station device STA performs wireless communication access authentication on the base station, send, to the STA, a message used to indicate whether the base station supports a STA in using a temporary MAC address TMA, so that the STA sends an authentication message to the base station according to the message, where the authentication message is an authentication message that is sent by the STA to the base station by using a TMA when the message is used to indicate that the base station supports a STA in using a TMA.

The authentication message receiving module 724 may be configured to: receive the authentication message, and parse out the TMA by using the authentication message.

The response sending module 726 may be configured to send an authentication response message to the STA according to the authentication message received by the authentication message receiving module 724, where the authentication response message is used to indicate whether the base station allows the STA to use the TMA for communication.

In a second possible implementation manner in the embodiment shown in FIG. 7, the temporary MAC address-based access apparatus 720 may further include a probe message receiving module 728.

The probe message receiving module 728 may be configured to receive a probe message sent by the STA by using a generated TMA.

The message is a probe response message, and the message sending module 722 may be further configured to:
send a probe response message to the STA, where the probe response message includes a first indicator used to indicate whether the base station supports a STA in using a TMA.

In a third possible implementation manner in the embodiment shown in FIG. 7, the message sending module 722 may include: a parsing unit 722a, a first determining unit 722b, a first response sending unit 722c, and a second response sending unit 722d.

The parsing unit 722a may be configured to parse out the TMA by using the probe message.

The first determining unit 722b may be configured to: when the base station supports a STA in using a TMA, determine whether the TMA conflicts with a prestored TMA, where the prestored TMA includes a TMA used by each STA that performs wireless communication connection with the base station.

The first response sending unit 722c may be configured to: when a determining result of the first determining unit 722b is that the TMA does not conflict with the prestored TMA, send, to the STA, a probe response message used to indicate that the STA is allowed to use the TMA for communication, so that the STA confirms using the TMA in subsequent communication.

The second response sending unit 722d may be configured to: when a determining result of the first determining unit 722b is that the TMA conflicts with the prestored TMA, send, to the STA, a probe response message used to indicate that the STA is not allowed to use the TMA for communication.

In a fourth possible implementation manner in the embodiment shown in FIG. 7, when the first indicator is used to indicate that the base station supports a STA in using a TMA, the probe response message further includes a generation rule used to instruct a STA to generate a TMA.

In a fifth possible implementation manner in the embodiment shown in FIG. 7, the probe response message further includes a second indicator used to indicate whether the STA is required to upload a real MAC address RMA of the STA.

In a sixth possible implementation manner in the embodiment shown in FIG. 7, the temporary MAC address-based access apparatus 720 may further include: a first generation module 7210, a first receiving module 7212, and a first decryption module 7214, or a second generation module 7216, a public key sending module 7218, a second receiving module 7220, and a second decryption module 7222.

The first generation module 7210 may be configured to: exchange key signaling information with the STA, and generate, according to the key signaling information, a key shared with the STA; the first receiving module 7212 may be configured to receive the RMA encrypted by the STA by using the key; and the first decryption module 7214 may be configured to decrypt the encrypted RMA by using the key; or
the second generation module 7216 may be configured to generate a public key and a private key; the public key sending module 7218 may be configured to send the public key to the STA; the second receiving module 7220 may be configured to receive the RMA encrypted by the STA by using the public key; and the second decryption module 7222 may be configured to decrypt the encrypted RMA by using the private key.

In a seventh possible implementation manner in the embodiment shown in FIG. 7, the temporary MAC address-based access apparatus 720 may further include: a detection module 7224 and an access allowing module 7226.

The detection module 7224 may be configured to detect whether the RMA obtained by means of decryption exists in a prestored RMA list, where the prestored RMA list stores an RMA of a STA allowed to access the base station.

The access allowing module 7226 may be configured to: when a detection result of the detection module 7224 is that the RMA obtained by means of decryption exists in the prestored RMA list, allow completing current access authentication.

Correspondingly, for the non-base station device STA 74, in an eighth possible implementation manner in the embodiment shown in FIG. 7, the temporary MAC address-based access apparatus 740 in the base station 74 may include: a message receiving module 742.

The message receiving module 742 may be configured to: in a process in which the non-base station device STA performs wireless communication access authentication on the base station, receive a message that is sent by the base station and is used to indicate whether the base station supports a STA in using a temporary MAC address TMA.

An authentication message sending module 744 may be configured to send an authentication message to the base station by using a TMA when the message received by the message receiving module 742 is used to indicate that the base station supports a STA in using a TMA.

In a ninth possible implementation manner in the embodiment shown in FIG. 7, the temporary MAC address-based access apparatus 740 may further include a probe message sending module 746.

The probe message sending module 746 may be configured to send a probe message to the base station by using a generated TMA, so that the base station parses out the TMA by using the probe message; when supporting a STA in using a TMA, the base station detects whether the TMA conflicts with a prestored TMA, where the prestored TMA includes a TMA used by each STA that performs wireless communication connection with the base station; if a detection result is that the TMA does not conflict with the prestored TMA, the base station sends, to the STA, a probe response message used to indicate that the STA is allowed to use the TMA for communication, so that the STA confirms using the TMA in subsequent communication; and if a detection result is that the TMA conflicts with the prestored TMA, the base station sends, to the STA, a probe response message used to indicate that the STA is not allowed to use the TMA for communication.

The message is the probe response message, and the message receiving module 742 may be further configured to:
receive the probe response message sent by the base station, where the probe response message includes a first indicator used to indicate whether the base station supports a STA in using a TMA.

In a tenth possible implementation manner in the embodiment shown in FIG. 7, when the first indicator is used to indicate that the base station supports a STA in using a TMA, the probe response message further includes a generation rule used to instruct a STA to generate a TMA.

In an eleventh possible implementation manner in the embodiment shown in FIG. 7, the authentication message sending module 744 may include: a third determining unit 744a, an address confirmation unit 744b, and a second generation unit 744c.

The third determining unit 744a may be configured to: when the first indicator in the probe response message is used to indicate that the base station supports a STA in using a TMA, determine whether the probe response message is used to indicate that the STA is allowed to use the TMA in the probe message for communication.

The address confirmation unit 744b may be configured to: when a determining result of the third determining unit 744a is that the probe response message is used to indicate that the STA is allowed to use the TMA in the probe message for communication, confirm using the TMA in subsequent communication.

The second generation unit 744c may be configured to: when a determining result of the third determining unit 744a is that the probe response message is used to indicate that the STA is not allowed to use the TMA in the probe message for communication, generate another TMA by using the generation rule, and send an authentication message to the base station by using the generated TMA.

The authentication message described herein is the authentication message sent by the authentication message sending module 646 described in FIG. 6.

That is, the second generation unit 744c may be configured to: when the determining result of the third determining unit 744 is that the probe response message is used to indicate that the STA is not allowed to use the TMA in the probe message for communication, generate the another TMA by using the generation rule, and trigger the authentication message sending module 644 to send the authentication message to the base station by using the generated TMA.

In a twelfth possible implementation manner in the embodiment shown in FIG. 7, the probe response message further includes a second indicator used to indicate whether the STA is required to upload an RMA of the STA.

In a thirteenth possible implementation manner in the embodiment shown in FIG. 7, the temporary MAC address-based access apparatus 740 may include: a response receiving module 748, an address confirmation module 7410, a determining module 7412, a third generation module 7414, and an access termination module 7416.

The response receiving module 748 is configured to receive the authentication response message sent by the base station, where the authentication response message is an authentication response message that is sent by the base station to the STA according to the authentication message after the base station receives the authentication message sent by the STA, the base station parses out the TMA by using the authentication message, and the authentication response message is used to indicate whether the base station allows the STA to use the TMA for communication.

The address confirmation module 7410 is configured to: when the authentication response message is used to indicate that the STA is allowed to use the TMA for communication, confirm using the TMA in subsequent communication.

The determining module 7412 is configured to: when the authentication response message is used to indicate that the STA is not allowed to use the TMA for communication, determine whether a quantity of times that the STA generates TMAs in current access authentication reaches a predetermined threshold; the third generation module 7414 is configured to: when a determining result of the determining module is that the quantity of times that the STA generates TMAs in the current access authentication does not reach the predetermined threshold, generate another TMA according to the generation rule, and send an authentication message to the base station by using the TMA; and the access termination module 7416 is configured to terminate the current access authentication when a determining result of the determining module is that the quantity of times that the STA generates TMAs in the current access authentication reaches the predetermined threshold.

In a fourteenth possible implementation manner in the embodiment shown in FIG. 7, the temporary MAC address-based access apparatus 740 includes: a fourth generation module 7418, a first encryption module 7420, and a first sending module 7422, or a public key receiving module 7424, a second encryption module 7426, and a second sending module 7428.

The fourth generation module 7418 may be configured to exchange key signaling information with the base station, and generate, according to the key signaling information, a key shared with the base station; the first encryption module 7420 may be configured to encrypt the RMA of the STA by using the key; and the first sending module 7422 may be configured to send the encrypted RMA to the base station, so that the base station decrypts the encrypted RMA by using the key; or
the public key receiving module 7424 may be configured to receive a public key sent by the base station, where the public key is generated by the base station; the second encryption module 7426 may be configured to encrypt the RMA of the STA by using the public key; and the second sending module 7428 may be configured to send the encrypted RMA to the base station, so that the base station decrypts the RMA by using a generated private key.

In an actual application, the base station 72 with the foregoing apparatus 720 may independently implement the temporary MAC address-based access method, and the non-base station device 74 with the foregoing apparatus 740 may also independently implement the temporary MAC address-based access method.

In conclusion, according to the temporary MAC address-based access system provided in this embodiment of the present invention, in a process in which a non-base station device STA performs wireless communication access authentication on a base station, the base station sends, to the STA, a message used to indicate whether the base station supports a STA in using a temporary MAC address TMA, thereby resolving a problem that a STA fails in normal communication easily caused because the STA continually performs access authentication on a base station by using a generated TMA when the base station does not support a STA in using a TMA. Because the base station may notify the STA whether the base station supports a STA in using a TMA, a case can be avoided in which access of the STA is rejected when the base station does not support a STA in using a TMA, thereby ensuring that the STA performs access authentication by using an RMA, and achieving an effect of wireless communication.

It should be noted that, when the STA performs wireless communication access authentication on the base station, the temporary MAC address-based access apparatus provided in the foregoing embodiments is described only by using division of the foregoing functional modules as an example. In practice, the foregoing functions may be allocated to different functional modules for implementation as required. That is, an internal structure of the base station and the non-base station device STA is divided into different functional modules to implement all or some of the functions described above. In addition, the temporary MAC address-based access apparatus provided in the foregoing embodiments pertains to a same concept as the embodiments of the temporary MAC address-based access method. For a specific implementation process of the apparatus, refer to the method embodiments, and details are not described herein again.

Referring to FIG. 8, FIG. 8 shows a schematic structural diagram of a base station according to an embodiment of the present invention. The base station may be the base station AP 120 in the implementation environment shown in FIG. 1. The base station may include a transmitter 802 and a receiver 804.

The transmitter 802 is configured to: in a process in which a non-base station device STA performs wireless communication access authentication on the base station, send, to the STA, a message used to indicate whether the base station supports a STA in using a temporary MAC address TMA, so that the STA sends an authentication message to the base station according to the message, where the authentication message is an authentication message that is sent by the STA to the base station by using a TMA when the message is used to indicate that the base station supports a STA in using a TMA.

The receiver 804 is configured to: receive the authentication message, and parse out the TMA by using the authentication message.

The transmitter 802 is further configured to send an authentication response message to the STA according to the authentication message received by the receiver 804, where the authentication response message is used to indicate whether the base station allows the STA to use the TMA for communication.

In conclusion, according to the base station provided in this embodiment of the present invention, in a process in which a non-base station device STA performs wireless communication access authentication on the base station, the base station sends, to the STA, a message used to indicate whether the base station supports a STA in using a temporary MAC address TMA, thereby resolving a problem that a STA fails in normal communication easily caused because the STA continually performs access authentication on a base station by using a generated TMA when the base station does not support a STA in using a TMA. Because the base station may notify the STA whether the base station supports a STA in using a TMA, a case can be avoided in which access of the STA is rejected when the base station does not support a STA in using a TMA, thereby ensuring that the STA performs access authentication by using an RMA, and achieving an effect of wireless communication.

Referring to FIG. 9, FIG. 9 shows a schematic structural diagram of a base station according to another embodiment of the present invention. The base station may be the base station AP 120 in the implementation environment shown in FIG. 1. The base station may include a transmitter 902, a processor 904, a receiver 906, and a memory 908. The processor 904 is coupled with the receiver 906, the transmitter 902, and the memory 908 separately, the memory 908 stores at least one type of computer software, and the processor 904 may implement a corresponding function by using the computer software stored in the memory 908.

In a first possible implementation manner in the embodiment shown in FIG. 9, the base station may include the transmitter 902. The transmitter 902 may be configured to: in a process in which a non-base station device STA performs wireless communication access authentication on the base station, send, to the STA, a message used to indicate whether the base station supports a STA in using a temporary MAC address TMA, so that the STA sends an authentication message to the base station according to the message, where the authentication message is an authentication message that is sent by the STA to the base station by using a TMA when the message is used to indicate that the base station supports a STA in using a TMA.

The receiver 906 is configured to: receive the authentication message, and parse out the TMA by using the authentication message.

The transmitter 902 is further configured to send an authentication response message to the STA according to the authentication message received by the receiver 906, where the authentication response message is used to indicate whether the base station allows the STA to use the TMA for communication.

In a second possible implementation manner in the embodiment shown in FIG. 9, the message is a discovery message, and the transmitter 902 may be further configured to:
send a discovery message at a predetermined time interval in a broadcast manner, where the discovery message includes a first indicator used to indicate whether the base station supports a STA in using a TMA.

In a third possible implementation manner in the embodiment shown in FIG. 9, when the first indicator is used to indicate that the base station supports a STA in using a TMA, the discovery message further includes a generation rule used to instruct a STA to generate a TMA.

In a fourth possible implementation manner in the embodiment shown in FIG. 9, the discovery message further includes a second indicator used to indicate whether the STA is required to upload a real MAC address RMA of the STA.

In a fifth possible implementation manner in the embodiment shown in FIG. 9, the receiver 906 may be further configured to receive a probe message sent by the STA by using a generated TMA.

The message is a probe response message, and the transmitter 902 may be further configured to:
send a probe response message to the STA, where the probe response message includes a first indicator used to indicate whether the base station supports a STA in using a TMA.

In a sixth possible implementation manner in the embodiment shown in FIG. 9, the processor 904 may be configured to parse out the TMA by using the probe message.

The processor 904 may be further configured to: when the base station supports a STA in using a TMA, determine whether the TMA conflicts with a prestored TMA, where the prestored TMA includes a TMA used by each STA that performs wireless communication connection with the base station.

The transmitter 902 may be further configured to: when a determining result of the processor 904 is that the TMA does not conflict with the prestored TMA, send, to the STA, a probe response message used to indicate that the STA is allowed to use the TMA for communication, so that the STA confirms using the TMA in subsequent communication.

The transmitter 902 may be further configured to: when a determining result of the processor 904 is that the TMA conflicts with the prestored TMA, send, to the STA, a probe response message used to indicate that the STA is not allowed to use the TMA for communication.

In a seventh possible implementation manner in the embodiment shown in FIG. 9, when the first indicator is used to indicate that the base station supports a STA in using a TMA, the probe response message further includes a generation rule used to instruct a STA to generate a TMA.

In an eighth possible implementation manner in the embodiment shown in FIG. 9, the probe response message further includes a second indicator used to indicate whether the STA is required to upload a real MAC address RMA of the STA.

In a ninth possible implementation manner in the embodiment shown in FIG. 9,
the processor 904 is further configured to: when the base station supports a STA in using a TMA, determine whether the TMA conflicts with the prestored TMA, where the prestored TMA includes a TMA used by each STA that performs wireless communication connection with the base station.

The transmitter 902 is further configured to: when a determining result of the processor 904 is that the TMA does not conflict with the prestored TMA, send, to the STA, an authentication response message used to indicate that the STA is allowed to use the TMA for communication, so that the STA confirms using the TMA in subsequent communication.

The transmitter 902 is further configured to: when a determining result of the processor 904 is that the TMA conflicts with the prestored TMA, send, to the STA, an authentication response message used to indicate that the STA is not allowed to use the TMA for communication.

In a tenth possible implementation manner in the embodiment shown in FIG. 9, the processor 904 may be further configured to: exchange key signaling information with the STA, and generate, according to the key signaling information, a key shared with the STA; the receiver 906 is further configured to receive the RMA encrypted by the STA by using the key; and the processor 904 is further configured to decrypt the encrypted RMA by using the key; or
The processor 904 may be further configured to generate a public key and a private key; the transmitter 902 is further configured to send the public key to the STA; the receiver 906 is further configured to receive the RMA encrypted by the STA by using the public key; and the processor 904 is further configured to decrypt the encrypted RMA by using the private key.

In an eleventh possible implementation manner in the embodiment shown in FIG. 9, the processor 904 may be further configured to detect whether the RMA obtained by means of decryption exists in a prestored RMA list, where the prestored RMA list stores an RMA of a STA allowed to access the base station.

The processor 904 may be further configured to: when a detection result is that the RMA obtained by means of decryption exists in the prestored RMA list, allow completing current access authentication.

In conclusion, according to the base station provided in this embodiment of the present invention, in a process in which a non-base station device STA performs wireless communication access authentication on the base station, the base station sends, to the STA, a message used to indicate whether the base station supports a STA in using a temporary MAC address TMA, thereby resolving a problem that a STA fails in normal communication easily caused because the STA continually performs access authentication on a base station by using a generated TMA when the base station does not support a STA in using a TMA. Because the base station may notify the STA whether the base station supports a STA in using a TMA, a case can be avoided in which access of the STA is rejected when the base station does not support a STA in using a TMA, thereby ensuring that the STA performs access authentication by using an RMA, and achieving an effect of wireless communication.

Referring to FIG. 10, FIG. 10 shows a schematic structural diagram of a STA according to an embodiment of the present invention. The STA may be the non-base station device STA 140 in the implementation environment shown in FIG. 1. The STA may include: a receiver 1002 and a transmitter 1004.

The receiver 1002 is configured to: in a process in which the non-base station device STA performs wireless communication access authentication on a base station, receive a message that is sent by the base station and is used to indicate whether the base station supports a STA in using a temporary MAC address TMA.

The transmitter 1004 is further configured to send an authentication message to the base station by using a TMA when the message received by the receiver 1002 is used to indicate that the base station supports a STA in using a TMA.

In conclusion, according to the STA provided in this embodiment of the present invention, in a process in which the non-base station device STA performs wireless communication access authentication on a base station, the base station sends, to the STA, a message used to indicate whether the base station supports a STA in using a temporary MAC address TMA, thereby resolving a problem that a STA fails in normal communication easily caused because the STA continually performs access authentication on a base station by using a generated TMA when the base station does not support a STA in using a TMA. Because the base station may notify the STA whether the base station supports a STA in using a TMA, a case can be avoided in which access of the STA is rejected when the base station does not support a STA in using a TMA, thereby ensuring that the STA performs access authentication by using an RMA, and achieving an effect of wireless communication.

Referring to FIG. 11, FIG. 11 shows a schematic structural diagram of a STA according to another embodiment of the present invention. The STA may be the non-base station device STA 140 in the implementation environment shown in FIG. 1. The STA may include: a receiver 1102, a processor 1104, a transmitter 1106, and a memory 1108. The processor 1104 is coupled with the receiver 1102, the transmitter 1106, and the memory 1108 separately, the memory 1108 stores at least one type of computer software, and the processor 1104 may implement a corresponding function by using the computer software stored in the memory 1108.

In a first possible implementation manner in the embodiment shown in FIG. 11, the STA may include the receiver 1102 and the transmitter 1106.

The receiver 1102 may be configured to: in a process in which the non-base station device STA performs wireless communication access authentication on a base station, receive a message that is sent by the base station and is used to indicate whether the base station supports a STA in using a temporary MAC address TMA.

The transmitter 1106 is further configured to send an authentication message to the base station by using a TMA when the message received by the receiver 1102 is used to indicate that the base station supports a STA in using a TMA.

In a second possible implementation manner in the embodiment shown in FIG. 11, the message is a discovery message, and the receiver 1102 may be further configured to:
receive a discovery message sent by the base station at a predetermined time interval in a broadcast manner, where the discovery message includes a first indicator used to indicate whether the base station supports a STA in using a TMA.

In a third possible implementation manner in the embodiment shown in FIG. 11, when the first indicator is used to indicate that the base station supports a STA in using a TMA, the discovery message further includes a generation rule used to instruct a STA to generate a TMA.

In a fourth possible implementation manner in the embodiment shown in FIG. 11, the STA may further include the processor 1104.

The processor 1104 may be configured to generate a TMA by using the generation rule when the first indicator is used to indicate that the base station supports a STA in using a TMA.

The transmitter 1106 may be configured to send the authentication message to the base station by using the TMA, so that the base station receives the authentication message, parses out the TMA by using the authentication message, and sends an authentication response message to the STA according to the authentication message, where the authentication response message is used to indicate whether the base station allows the STA to use the TMA for communication.

In a fifth possible implementation manner in the embodiment shown in FIG. 11, the discovery message further includes a second indicator used to indicate whether the STA is required to upload a real MAC address RMA of the STA.

In a sixth possible implementation manner in the embodiment shown in FIG. 11, the transmitter 1106 may be further configured to send a probe message to the base station by using a generated TMA, so that the base station parses out the TMA by using the probe message; when supporting a STA in using a TMA, the base station detects whether the TMA conflicts with a prestored TMA, where the prestored TMA includes a TMA used by each STA that performs wireless communication connection with the base station; if a detection result is that the TMA does not conflict with the prestored TMA, the base station sends, to the STA, a probe response message used to indicate that the STA is allowed to use the TMA for communication, so that the STA confirms using the TMA in subsequent communication; and if a detection result is that the TMA conflicts with the prestored TMA, the base station sends, to the STA, a probe response message used to indicate that the STA is not allowed to use the TMA for communication.

The message is the probe response message, and the receiver 1102 may be further configured to:
receive the probe response message sent by the base station, where the probe response message includes a first indicator used to indicate whether the base station supports a STA in using a TMA.

In a seventh possible implementation manner in the embodiment shown in FIG. 11, when the first indicator is used to indicate that the base station supports a STA in using a TMA, the probe response message further includes a generation rule used to instruct a STA to generate a TMA.

In an eighth possible implementation manner in the embodiment shown in FIG. 11, the processor 1104 may be further configured to: when the first indicator in the probe response message is used to indicate that the base station supports a STA in using a TMA, determine whether the probe response message is used to indicate that the STA is allowed to use the TMA in the probe message for communication.

The processor 1104 may be further configured to: when a determining result is that the probe response message is used to indicate that the STA is allowed to use the TMA in the probe message for communication, use the TMA in the probe message for communication, and confirm using the TMA in subsequent communication, and the transmitter is further configured to send an authentication message to the base station by using the TMA.

The processor 1104 may be further configured to: when a determining result is that the probe response message is used to indicate that the STA is not allowed to use the TMA in the probe message for communication, generate another TMA by using the generation rule, and the transmitter 1106 is further configured to send a probe message or an authentication message to the base station by using the generated TMA.

In a ninth possible implementation manner in the embodiment shown in FIG. 11, the probe response message further includes a second indicator used to indicate whether the STA is required to upload an RMA of the STA.

In a tenth possible implementation manner in the embodiment shown in FIG. 11, the receiver 1102 is further configured to receive the authentication response message sent by the base station, where the authentication response message is an authentication response message that is sent by the base station to the STA according to the authentication message after the base station receives the authentication message sent by the STA, the base station parses out the TMA by using the authentication message, and the authentication response message is used to indicate whether the base station allows the STA to use the TMA for communication.

The processor 1104 is further configured to: when the authentication response message is used to indicate that the STA is allowed to use the TMA for communication, confirm using the TMA in subsequent communication.

The processor 1104 is further configured to: when the authentication response message is used to indicate that the STA is not allowed to use the TMA for communication, determine whether a quantity of times that the STA generates TMAs in current access authentication reaches a predetermined threshold. The processor 1104 is further configured to: when a determining result is that the quantity of times that the STA generates TMAs in the current access authentication does not reach the predetermined threshold, generate another TMA according to the generation rule, and trigger the transmitter 1106 to send an authentication message to the base station by using the TMA. The processor 1104 is further configured to terminate the current access authentication when a determining result is that the quantity of times that the STA generates TMAs in the current access authentication reaches the predetermined threshold.

In an eleventh possible implementation manner in the embodiment shown in FIG. 11, the processor 1104 may be further configured to exchange key signaling information with the base station, and generate, according to the key signaling information, a key shared with the base station; the processor 1104 may be further configured to encrypt the RMA of the STA by using the key; and the transmitter 1106 may be further configured to send the encrypted RMA to the base station, so that the base station decrypts the encrypted RMA by using the key; or
the receiver 1102 may be further configured to receive a public key sent by the base station, where the public key is generated by the base station; the processor 1104 may be further configured to encrypt the RMA of the STA by using the public key; and the transmitter 1106 may be further configured to send the encrypted RMA to the base station, so that the base station decrypts the RMA by using a generated private key.

In conclusion, according to the STA provided in this embodiment of the present invention, in a process in which the non-base station device STA performs wireless communication access authentication on a base station, the base station sends, to the STA, a message used to indicate whether the base station supports a STA in using a temporary MAC address TMA, thereby resolving a problem that a STA fails in normal communication easily caused because the STA continually performs access authentication on a base station by using a generated TMA when the base station does not support a STA in using a TMA. Because the base station may notify the STA whether the base station supports a STA in using a TMA, a case can be avoided in which access of the STA is rejected when the base station does not support a STA in using a TMA, thereby ensuring that the STA performs access authentication by using an RMA, and achieving an effect of wireless communication.

Referring to FIG. 12, FIG. 12 shows a schematic structural diagram of a temporary MAC address-based access system according to yet another embodiment of the present invention. The temporary MAC address-based access system may be applied to the implementation environment shown in FIG. 1. The temporary MAC address-based access system may include: a base station 1202 and at least one non-base station device STA 1204.

The base station 1202 may be the base station described in FIG. 8 or FIG. 9; and the non-base station device STA 1204 may be the STA described in FIG. 10 or FIG. 11.

In conclusion, according to the temporary MAC address-based access system provided in this embodiment of the present invention, when a base station does not support a STA in using a TMA, a STA may continually perform access authentication on the base station by using a generated TMA, which easily causes the STA to fail in normal communication. According to the present invention, the problem is resolved by adding, to a message by the base station, a message indicating whether the STA is allowed to use a TMA for access.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disc, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A temporary MAC address-based access method, applied to a base station, wherein the method comprises:
in a process in which a non-base station device STA performs wireless communication access authentication on the base station, sending, to the STA, a message used to indicate whether the base station supports a STA in using a temporary MAC address TMA, so that the STA sends an authentication message to the base station according to the message, wherein the authentication message is an authentication message that is sent by the STA to the base station by using a TMA when the message is used to indicate that the base station supports a STA in using a TMA;
receiving the authentication message, and parsing out the TMA by using the authentication message; and
sending an authentication response message to the STA according to the authentication message, wherein the authentication response message is used to indicate whether the base station allows the STA to use the TMA for communication.

2. The method according to claim 1, wherein the message is a discovery message, and the sending, to the STA, a message used to indicate whether a STA is supported in using a TMA comprises:
sending a discovery message at a predetermined time interval in a broadcast manner, wherein the discovery message comprises a first indicator used to indicate whether the base station supports a STA in using a TMA.

3. The method according to claim 2, wherein when the first indicator is used to indicate that the base station supports a STA in using a TMA, the discovery message further comprises a generation rule used to instruct a STA to generate a TMA.

4. The method according to claim 2, wherein the discovery message further comprises a second indicator used to indicate whether the STA is required to upload a real MAC address RMA of the STA.

5. The method according to claim 1, before the sending, to the STA, a message used to indicate whether the base station supports a STA in using a temporary MAC address TMA, further comprising:
receiving a probe message sent by the STA by using a generated TMA; wherein
the message is a probe response message, and the sending, to the STA, a message used to indicate whether a STA is supported in using a temporary MAC address TMA comprises:
sending a probe response message to the STA, wherein the probe response message comprises a first indicator used to indicate whether the base station supports a STA in using a TMA.

6. The method according to claim 5, wherein the sending a probe response message to the STA comprises:
parsing out the TMA by using the probe message;
determining whether a TMA conflicts with a prestored TMA when the base station supports a STA in using the TMA, wherein the prestored TMA comprises a TMA used by each STA that performs wireless communication connection with the base station; and
sending, to the STA, the probe response message used to indicate that the STA is allowed to use the TMA for communication, so that the STA confirms using the TMA in subsequent communication when a determining result is that the TMA does not conflict with the prestored TMA,; or
sending, to the STA, the probe response message used to indicate that the STA is not allowed to use the TMA for communication when a determining result is that the TMA conflicts with the prestored TMA.

7. The method according to claim 5, wherein when the first indicator is used to indicate that the base station supports a STA in using a TMA, the probe response message further comprises a generation rule used to instruct a STA to generate a TMA.

8. The method according to claim 5, wherein the probe response message further comprises a second indicator used to indicate whether the STA is required to upload a real MAC address RMA of the STA.

9. The method according to any one of claims 1 to 8, wherein the sending an authentication response message to the STA according to the authentication message comprises:
determining whether a TMA conflicts with the prestored TMA when the base station supports a STA in using the TMA, wherein the prestored TMA comprises a TMA used by each STA that performs wireless communication connection with the base station; and
sending, to the STA, an authentication response message used to indicate that the STA is allowed to use the TMA for communication, so that the STA confirms using the TMA in subsequent communication when a determining result is that the TMA does not conflict with the prestored TMA,; or
sending, to the STA, an authentication response message used to indicate that the STA is not allowed to use the TMA for communication when a determining result is that the TMA conflicts with the prestored TMA.

10. The method according to claim 9, wherein the method further comprises:
exchanging key signaling information with the STA, and generating, according to the key signaling information, a key shared with the STA;
receiving the RMA encrypted by the STA by using the key; and decrypting the encrypted RMA by using the key; or
generating a public key and a private key;
sending the public key to the STA; receiving the RMA encrypted by the STA by using the public key; and
decrypting the encrypted RMA by using the private key.

11. The method according to claim 10, wherein the method further comprises:
detecting whether the RMA obtained by means of decryption exists in a prestored RMA list, wherein the prestored RMA list stores an RMA of a STA allowed to access the base station; and
allowing completing current access authentication when a detection result is that the RMA obtained by means of decryption exists in the prestored RMA list.

12. A temporary MAC address-based access method, applied to a non-base station device STA that performs wireless communication connection with a base station, wherein the method comprises:
in a process in which the non-base station device STA performs wireless communication access authentication on the base station, receiving a message that is sent by the base station and is used to indicate whether the base station supports a STA in using a temporary MAC address TMA; and
sending an authentication message to the base station by using a TMA when the message is used to indicate that the base station supports a STA in using a TMA.

13. The method according to claim 12, wherein the message is a discovery message, and the receiving a message that is sent by the base station and is used to indicate whether the base station supports a STA in using a temporary MAC address TMA comprises:
receiving a discovery message sent by the base station at a predetermined time interval in a broadcast manner, wherein the discovery message comprises a first indicator used to indicate whether the base station supports a STA in using a TMA.

14. The method according to claim 13, wherein when the first indicator is used to indicate that the base station supports a STA in using a TMA, the discovery message further comprises a generation rule used to instruct a STA to generate a TMA.

15. The method according to claim 14, wherein the sending an authentication message to the base station by using a TMA when the message is used to indicate that the base station supports a STA in using a TMA comprises:
generating a TMA by using the generation rule when the first indicator is used to indicate that the base station supports a STA in using a TMA; and
sending the authentication message to the base station by using the TMA, so that the base station receives the authentication message, parses out the TMA by using the authentication message, and sends an authentication response message to the STA according to the authentication message, wherein the authentication response message is used to indicate whether the base station allows the STA to use the TMA for communication.

16. The method according to claim 13, wherein the discovery message further comprises a second indicator used to indicate whether the STA is required to upload a real MAC address RMA of the STA.

17. The method according to claim 12, before the receiving a message that is sent by the base station and is used to indicate whether the base station supports a STA in using a temporary MAC address TMA, further comprising:
sending a probe message to the base station by using a generated TMA, so that the base station parses out the TMA by using the probe message; when supporting a STA in using a TMA, the base station detects whether the TMA conflicts with a prestored TMA, wherein the prestored TMA comprises a TMA used by each STA that performs wireless communication connection with the base station; if a detection result is that the TMA does not conflict with the prestored TMA, the base station sends, to the STA, a probe response message used to indicate that the STA is allowed to use the TMA for communication, so that the STA confirms using the TMA in subsequent communication; and if a detection result is that the TMA conflicts with the prestored TMA, the base station sends, to the STA, a probe response message used to indicate that the STA is not allowed to use the TMA for communication; wherein
the message is the probe response message, and the receiving a message that is sent by the base station and is used to indicate whether the base station supports a STA in using a temporary MAC address TMA comprises:
receiving the probe response message sent by the base station, wherein the probe response message comprises a first indicator used to indicate whether the base station supports a STA in using a TMA.

18. The method according to claim 17, wherein when the first indicator is used to indicate that the base station supports a STA in using a TMA, the probe response message further comprises a generation rule used to instruct a STA to generate a TMA.

19. The method according to claim 18, wherein the sending an authentication message to the base station by using a TMA when the message is used to indicate that the base station supports a STA in using a TMA comprises:
determining whether the probe response message is used to indicate that the STA is allowed to use the TMA in the probe message for communication when the first indicator in the probe response message is used to indicate that the base station supports a STA in using a TMA;
confirming using the TMA in subsequent communication, and sending an authentication message to the base station by using the TMA when a determining result is that the probe response message is used to indicate that the STA is allowed to use the TMA in the probe message for communication; and
generating another TMA by using the generation rule, and sending an authentication message to the base station by using the generated TMA when a determining result is that the probe response message is used to indicate that the STA is not allowed to use the TMA in the probe message for communication.

20. The method according to claim 17, wherein the probe response message further comprises a second indicator used to indicate whether the STA is required to upload an RMA of the STA.

21. The method according to any one of claims 12 to 20, after the sending an authentication message to the base station by using a TMA when the message is used to indicate that the base station supports a STA in using a TMA, further comprising:
receiving the authentication response message sent by the base station, wherein the authentication response message is an authentication response message that is sent by the base station to the STA according to the authentication message after the base station receives the authentication message sent by the STA, the base station parses out the TMA by using the authentication message, and the authentication response message is used to indicate whether the base station allows the STA to use the TMA for communication;
confirming using the TMA in subsequent communication when the authentication response message is used to indicate that the STA is allowed to use the TMA for communication; and
determining whether a quantity of times that the STA generates TMAs in current access authentication reaches a predetermined threshold when the authentication response message is used to indicate that the STA is not allowed to use the TMA for communication;
generating another TMA according to the generation rule, and sending an authentication message to the base station by using the TMA when a determining result is that the quantity of times that the STA generates TMAs in the current access authentication does not reach the predetermined threshold,; or terminating the current access authentication when a determining result is that the quantity of times that the STA generates TMAs in the current access authentication reaches the predetermined threshold.

22. The method according to claim 21, wherein the method further comprises:
exchanging key signaling information with the base station, and generating, according to the key signaling information, a key shared with the base station; encrypting the RMA of the STA by using the key; and sending the encrypted RMA to the base station, so that the base station decrypts the encrypted RMA by using the key; or
receiving a public key sent by the base station, wherein the public key is generated by the base station; encrypting the RMA of the STA by using the public key; and sending the encrypted RMA to the base station, so that the base station decrypts the RMA by using a generated private key.

23. A temporary MAC address-based access apparatus, applied to a base station, wherein the apparatus comprises:
a message sending module, configured to: in a process in which a non-base station device STA performs wireless communication access authentication on the base station, send, to the STA, a message used to indicate whether the base station supports a STA in using a temporary MAC address TMA, so that the STA sends an authentication message to the base station according to the message, wherein the authentication message is an authentication message that is sent by the STA to the base station by using a TMA when the message is used to indicate that the base station supports a STA in using a TMA;
an authentication message receiving module, configured to: receive the authentication message, and parse out the TMA by using the authentication message; and
a response sending module, configured to send an authentication response message to the STA according to the authentication message received by the authentication message receiving module, wherein the authentication response message is used to indicate whether the base station allows the STA to use the TMA for communication.

24. The apparatus according to claim 23, wherein the message is a discovery message, and the message sending module is further configured to:
send a discovery message at a predetermined time interval in a broadcast manner, wherein the discovery message comprises a first indicator used to indicate whether the base station supports a STA in using a TMA.

25. The apparatus according to claim 24, wherein when the first indicator is used to indicate that the base station supports a STA in using a TMA, the discovery message further comprises a generation rule used to instruct a STA to generate a TMA.

26. The apparatus according to claim 24, wherein the discovery message further comprises a second indicator used to indicate whether the STA is required to upload a real MAC address RMA of the STA.

27. The apparatus according to claim 23, wherein the apparatus further comprises:
a probe message receiving module, configured to receive a probe message sent by the STA by using a generated TMA; and
the message is a probe response message, and the message sending module is further configured to send a probe response message to the STA, wherein the probe response message comprises a first indicator used to indicate whether the base station supports a STA in using a TMA.

28. The apparatus according to claim 27, wherein the message sending module comprises:
a parsing unit, configured to parse out the TMA by using the probe message;
a first determining unit, configured to: determine whether a TMA conflicts with a prestored TMA when the base station supports a STA in using the TMA" wherein the prestored TMA comprises a TMA used by each STA that performs wireless communication connection with the base station;
a first response sending unit, configured to: send, to the STA, the probe response message used to indicate that the STA is allowed to use the TMA for communication, so that the STA confirms using the TMA in subsequent communication when a determining result of the first determining unit is that the TMA does not conflict with the prestored TMA; and
a second response sending unit, configured to: send, to the STA, the probe response message used to indicate that the STA is not allowed to use the TMA for communication when a determining result of the first determining unit is that the TMA conflicts with the prestored TMA.

29. The apparatus according to claim 27, wherein when the first indicator is used to indicate that the base station supports a STA in using a TMA, the probe response message further comprises a generation rule used to instruct a STA to generate a TMA.

30. The apparatus according to claim 27, wherein the probe response message further comprises a second indicator used to indicate whether the STA is required to upload a real MAC address RMA of the STA.

31. The apparatus according to any one of claims 23 to 30, wherein the response sending module comprises:
a second determining unit, configured to determine whether a TMA conflicts with the prestored TMA when the base station supports a STA in using the TMA, wherein the prestored TMA comprises a TMA used by each STA that performs wireless communication connection with the base station;
a third response sending unit, configured to send, to the STA, an authentication response message used to indicate that the STA is allowed to use the TMA for communication, so that the STA confirms using the TMA in subsequent communication when a determining result of the second determining unit is that the TMA does not conflict with the prestored TMA; and
a fourth response sending unit, configured to send, to the STA, an authentication response message used to indicate that the STA is not allowed to use the TMA for communication when a determining result of the second determining unit is that the TMA conflicts with the prestored TMA.

32. The apparatus according to claim 31, wherein the apparatus further comprises:
a first generation module, configured to exchange key signaling information with the STA, and generate, according to the key signaling information, a key shared with the STA;
a first receiving module, configured to receive the RMA encrypted by the STA by using the key; and a first decryption module, configured to decrypt the encrypted RMA by using the key; or
a second generation module, configured to generate a public key and a private key;
a public key sending module, configured to send the public key to the STA;
a second receiving module, configured to receive the RMA encrypted by the STA by using the public key; and
a second decryption module, configured to decrypt the encrypted RMA by using the private key.

33. The apparatus according to claim 32, wherein the apparatus further comprises:
a detection module, configured to detect whether the RMA obtained by means of decryption exists in a prestored RMA list, wherein the prestored RMA list stores an RMA of a STA allowed to access the base station; and
an access allowing module, configured to allow completing current access authentication when a detection result of the detection module is that the RMA obtained by means of decryption exists in the prestored RMA list.

34. A temporary MAC address-based access apparatus, applied to a non-base station device STA that performs wireless communication connection with a base station, wherein the apparatus comprises:
a message receiving module, configured to:in a process in which the non-base station device STA performs wireless communication access authentication on the base station, receive a message that is sent by the base station and is used to indicate whether the base station supports a STA in using a temporary MAC address TMA; and
an authentication message sending module, configured to send an authentication message to the base station by using a TMA when the message received by the message receiving module is used to indicate that the base station supports a STA in using a TMA.

35. The apparatus according to claim 34, wherein the message is a discovery message, and the message receiving module is further configured to:
receive a discovery message sent by the base station at a predetermined time interval in a broadcast manner, wherein the discovery message comprises a first indicator used to indicate whether the base station supports a STA in using a TMA.

36. The apparatus according to claim 35, wherein when the first indicator is used to indicate that the base station supports a STA in using a TMA, the discovery message further comprises a generation rule used to instruct a STA to generate a TMA.

37. The apparatus according to claim 36, wherein the authentication message sending module comprises:
a first generation unit, configured to generate a TMA by using the generation rule when the first indicator is used to indicate that the base station supports a STA in using a TMA; and
an authentication message sending unit, configured to send the authentication message to the base station by using the TMA, so that the base station receives the authentication message, parses out the TMA by using the authentication message, and sends an authentication response message to the STA according to the authentication message, wherein the authentication response message is used to indicate whether the base station allows the STA to use the TMA for communication.

38. The apparatus according to claim 35, wherein the discovery message further comprises a second indicator used to indicate whether the STA is required to upload a real MAC address RMA of the STA.

39. The apparatus according to claim 34, wherein the apparatus further comprises:
a probe message sending module, configured to send a probe message to the base station by using a generated TMA, so that the base station parses out the TMA by using the probe message; when supporting a STA in using a TMA, detects whether the TMA conflicts with a prestored TMA, wherein the prestored TMA comprises a TMA used by each STA that performs wireless communication connection with the base station; when a detection result is that the TMA does not conflict with the prestored TMA, sends, to the STA, a probe response message used to indicate that the STA is allowed to use the TMA for communication, so that the STA confirms using the TMA in subsequent communication; and when a detection result is that the TMA conflicts with the prestored TMA, sends, to the STA, a probe response message used to indicate that the STA is not allowed to use the TMA for communication; and
the message is the probe response message, and the message receiving module is further configured to:
receive the probe response message sent by the base station, wherein the probe response message comprises a first indicator used to indicate whether the base station supports a STA in using a TMA.

40. The apparatus according to claim 39, wherein when the first indicator is used to indicate that the base station supports a STA in using a TMA, the probe response message further comprises a generation rule used to instruct a STA to generate a TMA.

41. The apparatus according to claim 40, wherein the authentication message sending module comprises:
a third determining unit, configured to determine whether the probe response message is used to indicate that the STA is allowed to use the TMA in the probe message for communication when the first indicator in the probe response message is used to indicate that the base station supports a STA in using a TMA;
an address confirmation unit, configured to confirm using the TMA in subsequent communication when a determining result of the third determining unit is that the probe response message is used to indicate that the STA is allowed to use the TMA in the probe message for communication; and
a second generation unit, configured to generate another TMA by using the generation rule, and send an authentication message to the base station by using the generated TMA when a determining result of the third determining unit is that the probe response message is used to indicate that the STA is not allowed to use the TMA in the probe message for communication.

42. The apparatus according to claim 39, wherein the probe response message further comprises a second indicator used to indicate whether the STA is required to upload an RMA of the STA.

43. The apparatus according to claims 34 to 42, wherein the apparatus further comprises:
a response receiving module, configured to receive the authentication response message sent by the base station, wherein the authentication response message is an authentication response message that is sent by the base station to the STA according to the authentication message after the base station receives the authentication message sent by the STA, parses out the TMA by using the authentication message, and the authentication response message is used to indicate whether the base station allows the STA to use the TMA for communication;
an address confirmation module, configured to confirm using the TMA in subsequent communication when the authentication response message is used to indicate that the STA is allowed to use the TMA for communication; and
a determining module, configured to determine whether a quantity of times that the STA generates TMAs in current access authentication reaches a predetermined threshold when the authentication response message is used to indicate that the STA is not allowed to use the TMA for communication;
a third generation module, configured to generate another TMA according to the generation rule, and send an authentication message to the base station by using the TMA when a determining result of the determining module is that the quantity of times that the STA generates TMAs in the current access authentication does not reach the predetermined threshold; and
an access termination module, configured to terminate the current access authentication when a determining result of the determining module is that the quantity of times that the STA generates TMAs in the current access authentication reaches the predetermined threshold.

44. The apparatus according to claim 43, wherein the apparatus further comprises:
a fourth generation module, configured to exchange key signaling information with the base station, and generate, according to the key signaling information, a key shared with the base station;
a first encryption module, configured to encrypt the RMA of the STA by using the key; and
a first sending module, configured to send the encrypted RMA to the base station, so that the base station decrypts the encrypted RMA by using the key; or
a public key receiving module, configured to receive a public key sent by the base station, wherein the public key is generated by the base station;
a second encryption module, configured to encrypt the RMA of the STA by using the public key; and
a second sending module, configured to send the encrypted RMA to the base station, so that the base station decrypts the RMA by using a generated private key.

45. A temporary MAC address-based access system, wherein the system comprises a base station and at least one non-base station device STA;
the base station comprises the temporary MAC address-based access apparatus according to any one of claims 23 to 33; and
the STA comprises the temporary MAC address-based access apparatus according to any one of claims 34 to 44.
